# EUROPEAN PATENT SPECIFICATION

(11) **EP 1 367 102 B1**
(45) Date of publication and mention of the grant of the patent: **15.02.2006**
(21) Application number: 03011175.1
(22) Date of filing: 27.05.2003
(51) Int. Cl.: C09D 11/00, G03G 9/08, G03G 9/10, G03G 9/12

(54) **Oil based ink composition for inkjet printer**
Farbzusammensetzung auf Ölbasis für Tintnestrahldrucker
Composition d' encre à base d'huile pour imprimante à jet d'encre

(30) Priority: 27.05.2002 JP 2002152499
(43) Date of publication of application: 03.12.2003
(73) Proprietor: FUJI PHOTO FILM CO., LTD., Minami-Ashigara-shi, Kanagawa 250-0123 (JP)
(72) Inventor: Horie, Seiji, Fuji Photo Film Co., Ltd., Haibara-gun, Shizuoka (JP)
(74) Representative: HOFFMANN EITLE

(56) References cited:
- EP-A- 0 468 765
- EP-A- 0 684 261
- EP-A- 1 205 815
- US-A- 4 360 580
- US-A- 4 521 505
- US-A- 5 714 993

## Description

### FIELD OF THE INVENTION

The present invention relates to a method of inkjet recording an oil based ink. According to the method, ink is ejected to form letters or images on an ink receiving medium such as recording paper. In particular, the invention relates to the use in this method of an oil based ink comprising a colored resin particle in which a coloring component particle of surface-treated coloring agent is further coated with a polymer.

### BACKGROUND OF THE INVENTION

Hitherto, there have been known various inkjet recording systems including an on-demand ejection system and a continuous ejection system, as described in, for example, Takeshi Agui, et al., *Real Color Hard Copy,* published by Sangyo Tosho (1993), Shin Ohno, *Non-impact Printing* - *Technologies and Materials* -, published by CMC Publishing Co., Ltd. (1986), and Takeshi Amari, *Inkjet Printers - Technologies and Materials* -, published by CMC Publishing Co., Ltd. (1998). Further, the continuous type includes electrostatic systems (such as Sweet type and Hertz type); and the on-demand type includes a piezoelectric system, a shear mode piezoelectric system, a thermal inkjet system, and a recording system called an electrostatic acceleration type. As inks to be used in these inkjet recording systems, are generally used aqueous inks that are free from ink clogging in an ink discharge section or ink supply passage, excellent in discharge stability and good in quality as a color image such as color and gloss.

As the on-demand type inkjet system using an electrostatic force, are known systems called electrostatic acceleration type inkjet or slit jet, as described in Susumu Ichinose, Yuji Ohba, *Denshi Tsushin Gakkai Rombunnshi,* Vol. J66-C (No. 1), p.47 (1983), Tadayoshi Ohno, Mamoru Mizuguchi, *Gazo Denshi Gakkaishi,* Vol. 10 (No. 3), p.157 (1981), etc. Specific embodiments are disclosed in, for example, JP-A-56-170 (the term "JP-A" as used herein means an "unexamined published Japanese patent application"), JP-A-56-4467, and JP-A-57-151374. In these systems, an ink is fed from an ink tank into a slit-like ink chamber having a plurality of electrodes disposed inside a slit-like ink-holding section, and a high voltage is selectively applied to these electrodes, thereby ejecting the ink in the vicinity of the electrodes to recording paper closely positioned to the slit.

An electrostatic system of a concentration discharge type without using a slit-like recording head is disclosed in JP-A-10-138493. In this system, a plurality of individual electrodes allowing an electrostatic force to act on a colorant component in an ink are constituted of a control electrode substrate composed of an insulating substrate having through-hole formed therein and a control electrode formed corresponding to the through-hole and a convex ink guide arranged in the substantially center position of the through-hole, the ink on the surface of the convex ink guide is carried to an ink droplet ejection position by a surface tension, and a prescribed voltage is applied to the control electrode to eject ink droplets to a recording medium, thereby conducting recording.

As ink to be used for these various inkjet recording systems, ink prepared by dissolving various water-soluble dyes in water or a solvent composed of water and a water-soluble organic solvent and optionally adding various additives thereto (hereinafter referred to as "aqueous dye ink") is mainly employed. However, in the case where printing is actually carried out using the aqueous dye ink, there were involved drawbacks such that the ink bleeds on recording paper depending on the kind of paper, whereby high-quality print can not be obtained; a formed recorded image is deteriorated in water resistance and light fastness; drying of ink on recording paper is so slow that streaks occur; and that a recorded image is deteriorated due to color mixing (color turbidity or color unevenness occurred on the interface when printing is conducted while making dots having a different color adjacent to each other).

For improving the water resistance and light fastness of recorded image as the problems of aqueous dye ink as described above, there are made various proposals to apply pigment based ink comprising fine particles of a pigment dispersed in an aqueous solvent or a non-aqueous solvent to the inkjet recording system. For example, ink for inkjet printer comprising a pigment dispersed in a solvent composed mainly of water are proposed in JP-A-2-255875, JP-A-3-76767, JP-A-3-76768, JP-A-56-147871, and JP-A-56-147868. However, there were involved problems such that since the pigment is insoluble in a medium, dispersion stability is in general poor to likely cause clogging in a nozzle section.

On the other hand, ink comprising a pigment dispersed in a non-polar insulating solvent (hereinafter referred to as "oil based pigment ink") has advantages such that it is less in bleeding due to good absorption on paper and that a recorded image is good in water resistance. For example, JP-A-57-10660 proposes oil based pigment inks in which a pigment is pulverized with alcoholamide dispersants, and JP-A-57-10661 proposes oil based inks in which a pigment is pulverized with sorbitan based dispersants. However, such ink still involved problems such that it is not sufficient to uniformly disperse the pigment particles in the state of fine particles in the insulating solvent and that clogging in a nozzle section is liable to occur due to poor dispersion stability. In addition, there was a great defect such that the ink is poor in scratch resistance because the pigment itself does not have a fixing ability to recording paper.

For improving these problems, are proposed resin dissolution type oil based ink using a resin soluble in a non-polar insulating solvent as a fixing agent and a pigment dispersant. For example, JP-A-3-234772 proposes a terpene phenol based resin as the above-described resin. However, the thus proposed resin is still insufficient with respect to dispersion stability of pigment and is problematic in reliability as ink. In addition, since the resin is dissolved in the non-polar solvent, the resin does not remain in an amount sufficient for completely fixing the pigment to recording paper, so that water resistance and scratch resistance are not sufficient.

Thus, for obtaining high-level scratch resistance, it is proposed to coat pigment particles with a resin insoluble or semi-soluble in a non-polar insulating solvent. For example, JP-A-4-25574 proposes oil based inks comprising a pigment coated with a resin by micro-encapsulation, etc. However, since it is difficult to uniformly disperse the pigment-included resin particles in the state of fine particles and dispersion stability thereof is not sufficient, there was a problem in reliability as ink.

In addition, in recent years, high image quality with photographic image quality is attained by ordinary inkjet printers using aqueous dye ink. With respect to pigment ink, for increasing color forming property and transparency, it is required to make pigment fine as far as possible and to keep dispersion state thereof stably.

However, in contrast, when the pigment is made finer, pulverization of pigment primary particles occurs simultaneously with atomization of the pigment. Additionally, coagulation energy becomes high simultaneously by an increase of surface energy, leading to easiness of occurrence of re-coagulation. Ultimately, there is brought about failure such that storage stability of the atomized pigment dispersion is lost. As described above, with respect to pigment dispersion to be used for oil based pigment ink for inkjet printer, atomization at a higher level is required. However, high-level techniques are required for dispersing pigment in the state of fine particle, and it is very difficult to increase dispersion stability thereof. Therefore, it is the present status that oil based pigment ink capable of meeting the foregoing requirements is hardly available.

Moreover, in the case where such oil based pigment ink is used for an electrostatic inkjet printer or as electrophotographic liquid developer, stability with the lapse of time as well as control of charge polarity are required. However, since it is very difficult to control the polarity on the pigment surface, it is the present status that oil based pigment ink capable of meeting the foregoing requirements is hardly available. Electrophotographic liquid developer using a non-aqueous solvent is ordinarily prepared by pulverizing a mixture comprising an aliphatic hydrocarbon solvent, a coloring agent, a fixing resin and a dispersant, and optionally various additives in a ball mill or an attritor, etc. Various methods have been proposed for the production thereof. On the other hand, JP-A-63-174070 discloses colored liquid developer comprising, as a coloring agent, a polymer latex dyed with a dye, wherein the polymer latex is obtained by polymerization of styrene or an acrylic monomer in a non-aqueous solvent. However, the method of using a dye as a coloring agent involved defects such that preparation of black liquid developer is difficult, that image density is low because of dye system and that light fading occurs. As an example using pigment as coloring agent, JP-B-62-3859 proposes electrophotographic liquid developer containing a pigment and as a fixing resin, a resin obtained by reacting a natural resin-modified thermosetting resin with a long chain alkyl group-containing monomer. Although the effect for improving dispersion stability of coloring agent is found, the electrophotographic liquid developer is still insufficient in the dispersion stability. Thus, with respect to electrophotographic liquid developers using pigment as coloring agent, sufficient dispersion stability as well as scratch resistance have been demanded. In addition, since pigments are different in charge polarity depending on kinds thereof, it has been demanded to make the charge polarity of pigment particle clear and to prevent change of the charge polarity with the lapse of time.

### SUMMARY OF THE INVENTION

Therefore, an object of the invention is to provide an oil based ink for inkjet printer in which a pigment is uniformly dispersed in the state of fine particle, dispersion stability of a pigment dispersion is excellent, and discharge stability is so high that no clogging occurs in a nozzle section.

Another object of the invention is to provide an oil based ink for inkjet printer having excellent drying property on recording paper, excellent water resistance of recorded image, excellent light fastness and high-level scratch resistance.

A further object of the invention is to provide an oil based ink for use in an electrostatic inkjet printer, which is excellent not only in dispersion stability and scratch resistance but also in control of charge polarity and stability of charge with the lapse of time.

A still further object of the invention is to provide an electrophotographic liquid developer, which is excellent not only in dispersion stability and scratch resistance but also in control of charge polarity and stability of charge with the lapse of time.

A still further object of the invention is to provide a production process for obtaining an ink for inkjet printer comprising resin particles including a pigment uniformly dispersed in the state of fine particle.

It has been found that the foregoing objects can be attained by the following constructions.
(1) a method of inkjet recording comprising ejecting onto an ink receiving medium an oil based ink composition comprising colored resin particles comprising a surface-treated coloring agent covered with a resin obtainable by dispersion polymerisation of a monofunctional polymerizable monomer (M) with coloring component fine particles comprising a surface-treated coloring agent, which are dispersed in a non-aqueous solvent having a dielectric constant of from 1.5 to 20 and a surface tension of from 15 to 60 mN/m at 25°C, as seed particles, in the presence of a dispersion stabilizer (P) soluble in the non-aqueous solvent and a polymerisation initiator.
(2) a method as set forth above in (1), wherein the surface-treated coloring agent is an organic or inorganic pigment coated with a polymer.
(3) a method as set forth above in (1), wherein the coloring component fine particles are obtainable by dispersing the surface-treated coloring component in the non-aqueous solvent with a pigment dispersant.

### BRIEF DESCRIPTION OF THE DRAWINGS

Fig. 1 is a sectional view of an inkjet head including an ejection electrode corresponding to a recording dot.
Fig. 2 is a front view showing a construction of ejection electrode plates of a line scanning type multi-channel inkjet head looking from a recording medium side.

### DETAILED DESCRIPTION OF THE INVENTION

The invention will be described below in detail.

A non-aqueous dispersion medium that is used in the oil based ink composition for inkjet printer according to the invention is a non-polar insulating solvent and preferably has a dielectric constant of from 1.5 to 20 and a surface tension of from 15 to 60 mN/m at 25 °C. Also, a non-aqueous dispersion medium that is used in the electrophotographic liquid developer according to the invention preferably has a volume resistivity of 10⁹ Ωcm or more. Characteristics further demanded are that toxicity is low, that flammability is low and that odor is low.

The non-aqueous dispersion media include linear or branched aliphatic hydrocarbons, alicyclic hydrocarbons, aromatic hydrocarbons, petroleum naphthas, and halogen-substituted products thereof. Examples thereof include hexane, octane, isooctane, decane, isodecane, decalin, nonane, dodecane, isododecane, Isopar E, Isopar G, Isopar H and Isopar L (manufactured by Exxon), Solutol (manufactured by Phillips Oil), IP Solvent (manufactured by Idemitsu Petrochemical Co., Ltd.), and peptroleum naphthas including S.B.R., Shellsol 70 and Shellsol 71 (manufactured by Shell Petrochemical) and Vegasol (manufactured by Mobil Oil). The solvents can be used alone or in admixture.

The hydrocarbon solvents are preferably high-purity isoparaffinic hydrocarbons having a boiling point in the range of from 150 to 350 °C. Examples of commercially available products include Isopar G, Isopar H, Isopar L, Isopar M and Isopar V (trade names of Exxon Chemical), Norpar 12, Norpar 13 and Norpar 15 (trade names of Exxon Chemical), IP Solvent 1620 and IP Solvent 2028 (trade names of Idemitsu Petrochemical Co., Ltd.), Isosol 300 and Isosol 400 (trade names of Nippon Pertochemicals), and Amsco OMS and Amsco 460 solvents (trade names of American Mineral Spirits Corp.). These products are an aliphatic saturated hydrocarbon having an extremely high purity, having a viscosity at 25 °C of 3 cSt or less, a surface tension at 25 °C of from 22.5 to 28.0 mN/m, and a volume resistivity at 25 °C of 10¹⁰ Ω · cm or more. Further, these products have characteristics such that they are stable due to low reactivity and are safe due to low toxicity and that their odors are low.

As halogen-substituted hydrocarbon solvents, are enumerated fluorocarbon based solvents. Examples thereof include perfluoroalkanes represented by CₙF₂ₙ₊₂ such as C₇F₁₆ and C₈F₁₈ (such as Fluorinert PF5080 and Fluoriner PF5070 (trade names of Sumitomo 3M)), fluorine based inert liquids (such as Fluorinert FC Series (trade names of Sumitomo 3M)), fluorocarbons (such as Krytox GPL Series (trade names of DuPont Japan Ltd.)), fleons (such as HCFC-141b (a trade name of Daikin Industries, Ltd.)),and iodinated fluorocarbons such as F(CF₂)₄CH₂CH₂I and F(CF₂)₆I (such as 1-1420 and I-1600 (trade names of Daikin Fine Chemical Laboratory, Ltd.)).

As the non-aqueous solvent that is used in the invention, higher fatty acid esters and silicone oils can also be used. Specific examples of the silicone oil include low-viscosity synthetic dimethylpolysiolxanes, which are commercially available as, for example, KF96L (a trade name of Shin-Etsu Silicone) and SH200 (a trade name of Dow Corning Toray Silicone).

The silicone oils are not limited to these specific examples. As the dimethylpolysiloxanes, those having a very broad viscosity range are available depending on the molecular weight, but those having a viscosity at 25 °C in the range of from 1 to 20 cSt are preferably used. Similar to the isoparaffinic hydrocarbons, these dimethylpolysiloxanes have a volume resistivity at 25 °C of 10¹⁰ Ω· cm or more and have characteristics such as high stability, high safety and odorlessness. Further, these dimethylpolysiloxanes are characterized by low surface tension, i.e., the surface tension is from 18 to 21 mN/m at 25 °C.

Examples of solvents that can be mixed and jointly used with the foregoing organic solvents include alcohols (such as methyl alcohol, ethyl alcohol, propyl alcohol, butyl alcohol, and fluorinated alcohol), ketones (such as acetone, methyl ethyl ketone, and cyclohexanone), carboxylic acid esters (such as methyl acetate, ethyl acetate, propyl acetate, butyl acetate, methyl propionate, and ethyl propionate), ethers (such as diethyl ether, dipropyl ether, tetrahydrofuran, and dioxane), and halogenated hydrocarbons (such as methylene dichloride, chloroform, carbon tetrachloride, dichloroethane, and methylchloroform).

Next, the surface-treated coloring component of the invention will be described below in detail.

The surface-treated coloring component of the invention (hereinafter sometimes referred to simply as "coloring component") is one prepared by surface treating a coloring agent. The coloring agent is not particularly limited, and all of ordinarily marketed organic pigments and inorganic pigments are enumerated.

Examples of coloring agents that exhibit yellow color include mono-azo pigments such as C.I. Pigment Yellow 1 (Fast Yellow G, etc.) and C.I. Pigment Yellow 74; dis-azo pigments such as C.I. Pigment Yellow 12 (Disazo Yellow AAA, etc.) and C.I. Pigment Yellow 17; non-benzidine based azo pigments such as C.I. Pigment Yellow 180; azo lake pigments such as C.I. Pigment Yellow 100 (Tartrazine Yellow Lake, etc.); condensed azo pigments such as C.I. Pigment Yellow 95 (Condensed Azo Yellow GR, etc.); acidic dye lake pigments such as C.I. Pigment Yellow 115 (Quinoline Yellow Lake, etc.); basic dye lake pigments such as C.I. Pigment Yellow 18 (Thioflavin Lake, etc.); anthraquinone based pigments such as Flavanthrone Yellow (Y-24); isoindolinone pigments such as Isoindolinone Yellow 3RLT (Y-110); quinophthalone pigments such as Quinophthalone Yellow (Y-138); isoindoline pigments such as Isoindoline Yellow (Y-139); nitroso pigments such as C.I. Pigment Yellow 153 (Nickel Nitroso Yellow, etc.); and metal complex azomethine pigments such as C.I. Pigment Yellow 117 (copper Azomethine Yellow, etc.).

Examples of coloring agents that exhibit magenta color include mono-azo based pigments such as C.I. Pigment Red 3 (Toluidine Red, etc.); dis-azo pigments such as C.I. Pigment Red 38 (Pyrazolone Red B, etc.) ; azo lake pigments such as C.I. Pigment Red 53: 1 (Lake Red C, etc.) and C. I . Pigment Red 57: 1 (Brilliant Carmine 6B); condensed azo pigments such, as C. I. Pigment Red 144 (Condensed Azo Lake BR, etc.); acidic dye lake pigments such as C. I. Pigment Red 174 (Phloxine B Lake, etc.) ; basic dye lake pigments such as C.I. Pigment Red 81 (Rhodamine 6G' Lake, etc.); anthraquinone based pigments such as C.I. Pigment Red 177 (Dianthraquinonyl Red, etc.); thioindigo pigments such as C.I. Pigment Red 88 (such as Thioindigo Bordeaux, etc.); perinone pigments such as C.I. Pigment Red 194 (Perinone Red, etc.); perylene pigments such as C.I. Pigment Red 149 (Perylene Scarlet, etc.); quinacridone pigments such as C.I. Pigment Red 122 (Quinacridone Magenta, etc.); isoindolinone pigments such as C.I. Pigment Red 180 (Isoindolinone Red 2BLT, etc.); and arizalin lake pigments such as C.I. Pigment Red 83 (Madder Lake, etc.).

Examples of pigments that exhibit cyan color include dis-azo based pigments such as C.I. Pigment Blue 25 (Dianisidine Blue, etc.) ; phthalocyanine pigments such as C.I. Pigment Blue 15 (Phthalocyanine Blue, etc.); acidic dye lake pigments such as C.I. Pigment Blue 24 (Peacock Blue Lake, etc.); basic dye lake pigments such as C.I. Pigment Blue 1 (Victoria Pure Blue BO Lake, etc.); anthraquinone based pigments such as C.I. Pigment Blue 60 (Indanthrone Blue, etc.) ; and alkali blue pigments such as C. I. Pigment Blue 18 (Alkali Blue V-5:1).

Examples of pigments that exhibit black color include organic pigments such as aniline black based pigments such as BK-1 (Aniline Black), iron oxide pigments, and carbon black pigments such as furnace black, lamp black, acetylene black, and channel black.

Also, metallic powders are employable for attaining color reproduction such as gold, silver, or copper color.

The surface treatment methods of coloring agent are described in *Pigment Dispersing Technologies,* Chapter 5, published by Gijutsu Joho Kyokai Co., Ltd., and examples thereof include rosin treatment, polymer treatment, grafting treatment, and plasma treatment..

The "rosin treatment" as referred to herein includes a method in which a pigment and rosin are mechanically kneaded to treat the surface of the pigment with rosin; and a method in which after adding an alkaline aqueous solution of rosin to an aqueous slurry of a pigment, an alkaline earth metal salt or an acid is added to the mixture to deposit a sparingly soluble salt of rosin or a free acid of rosin on the surfaces of pigment particles. In the rosin treatment, the rosin is ordinarily used in an amount of from several % to about 20 %. The rosin treatment brings about the following large effects: (1) fine and highly transparent pigments are obtained due to an effect for preventing crystal growth of pigment; (2) mechanical dispersion is easily performed because of week cohesive force of particles in drying; and (3) wetting property to oil based vehicles is improved by increasing oleophilicity on the pigment surface. In particular, the rosin treatment is used in the field of printing inks in many cases.

The "grafting treatment" as referred to herein is to conduct grafting reaction of functional groups (such as a hydroxyl group, a carboxyl group, and an amino group) present on the surfaces of inorganic fine particle such as carbon black, silica or titanium oxide, or organic pigment with a polymer. The grafting reaction of the polymer to the pigment surface includes (1) a method in which a vinyl monomer is polymerized in the presence of pigment fine particles using a polymerization initiator to terminate the growing polymer formed in the system by the functional group on the pigment particle surface; (2) a method in which a graft chain is grown from a polymerization initiating group introduced on the pigment fine particle surface; and (3) a method by polymer reaction of the functional group on the pigment fine particle surface and a terminal functional group of the polymer.

The "plasma treatment" as referred to herein is to conduct modification of the pigment powder surface by low-temperature plasma or thermal plasma. Specific examples of the treatment of the pigment surface by low-temperature plasma include (1) modification by plasma irradiation with a non-polymerizable gas such as oxygen or nitrogen; (2) modification by formation of plasma polymerized film using a polymerizable gas; and (3) modification by a two-stage plasma initiation graft polymerization reaction comprising a first stage for forming active species on the pigment surface by plasma irradiation and a second stage for bringing the active species into contact with a monomer to proceed graft polymerization as the post reaction.

From the viewpoints that dispersibility of the coloring agent is enhanced and that the dispersed coloring component as seed particle is subjected to dispersion polymerization in a non-aqueous solvent, the following polymer treatments are preferred.

Representative examples of the polymer treatment include a chemical method of utilizing the in-situ polymerization method as described in *Pigment Dispersing Technologies,* page 99, et seq, published by Gijutsu Joho Kyokai Co., Ltd., a method of utilizing the phase separation method (coacervation), and a method of conducting the treatment by a mechanical force during pigment dispersion.

The in-situ polymerization method includes a method in which a system of pigment and polymer is dispersed and then subjected to suspension polymerization; a method in which a pigment is dispersed in an aqueous system in the presence of a dispersant, to which are then added a polar polymer, a vinyl based polymer, and a polyfunctional crosslinking polymer to undergo polymerization; and a method in which a dispersion of a monomer and a pigment is subjected to bulk polymerization and then to suspension polymerization or emulsion polymerization, thereby thoroughly achieving adsorption onto the pigment. The phase separation method (coacervation) includes a method in which a pigment is dispersed in a polymer solution, and the solubility of the polymer is reduced by any method to deposit the polymer from the solution system on the pigment particle. This method is characterized in that the polymer can be selected from a wide range, as compared with the chemical method (in-situ polymerization method). There are widely used a method in which a non-solvent is added to a resin solution having a pigment dispersed therein, to deposit the resin on the pigment surface; and a method in which a pigment is finely dispersed in a water-soluble polymer or water-soluble resin solution, and the pH is then adjusted to deposit the polymer or resin on the pigment surface, inclusive of the rosin treatment. When a pigment is dispersed in an acid solution of an acid-soluble nitrogen-containing acrylic resin, and the pH is then increased to insolubilize the polymer on the pigment surface, there are effects in the ink, such as prevention of coagulation and enhancement in fluidity, gloss and coloring power. As an example of the method of polymer treatment by a mechanical force, a polymer and a pigment are previously mixed such that the pigment content is from 5 to 95 %, the mixture is kneaded by a kneader, three rolls,- etc. while heating, and the kneaded mixture is then pulverized by a pin mill, etc. A method called flushing resin treatment is also included in the mechanical polymer treatment method.

As the resin that is used in the polymer treatment, are preferable resins capable of not only enhancing dispersibility of a pigment in a non-aqueous solvent but also imparting heat dispersion stability during dispersion polymerization in the non-aqueous solvent using the dispersed coloring component fine particles as seed particles. Resins that are conventionally used in liquid developers can also be used.

As the resin, are preferable resins having a segment solvating with a solvent, a segment hardly solvating with a solvent and a polar group-containing segment for the purposes of adsorbing on a coloring agent and having a function to well disperse in a non-aqueous solvent. Examples of monomer that solvates with a solvent after polymerization include lauryl methacrylate, stearyl methacrylate, 2-ethylhexyl methacrylate, and cetyl methacrylate. Examples of monomer that hardly solvates with a solvent after polymerization include methyl methacrylate, ethyl methacrylate, isopropyl methacrylate, styrene, and vinyltoluene. Examples of polar group-containing monomer include an acid group-containing monomer such as acrylic acid, methacrylic acid, itaconic acid, fumaric acid, maleic acid, styrenesulfonic acid, and an alkali metal salt thereof; and a basic group-containing monomer such as dimethylamonoethyl methacrylate, diethylaminoethyl methacrylate, vinylpyridine, vinylpyrrolidone, vinylpiperidine, and vinyllactam.

Specific examples of the resin for use in the polymer treatment include olefin polymers and copolymers (such as polyethylene, polypropylene, polyisobutylene, ethylene-vinyl acetate copolymers, ethylene-acrylate copolymers, ethylene-methacrylate copolymers, and ethylene-methacrylic acid copolymers), polymers and copolymers of styrene or derivatives thereof (such as butadiene-styrene copolymers, isoprene-styrene copolymers, styrene-methacrylate copolymers, and styrene-acrylate copolymers), acrylic acid ester polymers and copolymers, methacrylic acid ester polymers and copolymers, itaconic acid diester polymers and copolymers, maleic anhydride copolymers, rosin resins, hydrogenated rosin resins, petroleum resins, hydrogenated petroleum resins, maleic acid resins, terpene resins, hydrogenated terpene resins, chroman-indene resins, cyclized rubber-methacrylic acid ester copolymers, and cyclized rubber-acrylic acid ester copolymers.

In the invention, a weight ratio of the coloring agent to the resin to be used in the polymer treatment is preferably in the range of from 95/5 to 5/95, and more preferably from 80/20 to 10/90.

Additionally, as the surface-treated coloring component, conventional commercially available pigment can be used. Specific examples of the commercially available processed pigment include Microlith pigments manufactured by Ciba Speciality Chemicals. Preferred examples of processed pigment include Microlith-T pigment in which pigment is coated with a rosin ester resin.

In the invention, the foregoing surface-treated coloring component is dispersed in the state of fine particles in a non-aqueous solvent to obtain coloring component fine particles, which are used as seed particles in the subsequent dispersion polymerization. First of all, the dispersion step of the coloring component is described.

In the dispersion step, in order to disperse the coloring component in the state of fine particles and to stabilize the dispersion in the non-aqueous solvent, it is preferred to use a pigment dispersant.

As the pigment dispersant for dispersing the surface-treated coloring component in the state of fine particles in a non-aqueous dispersion medium, which can be used in the invention, ordinary pigment dispersants applied in the non-aqueous dispersion medium are used. Any pigment dispersants can be used so far as they are compatible with the foregoing non-polar insulating solvent and can stably disperse the coloring component in the state of fine particles.

Specific examples of pigment dispersant include nonionic surfactants such as sorbitan fatty acid esters (such as sorbitan monooleate, sorbitan monolaurate, sorbitan sesquioleate, and sorbitan trioelate), polyoxyethylene sorbitan fatty acid esters (such as polyoxyethylene sorbitan monostearate and polyoxyethylene sorbitan monooleate), polyethylene glycol fatty acid esters (such as polyethylene glycol monostearate and polyethylene glycol diisostearate), polyoxyethylene alkylphenyl ethers (such as polyoxyethylene nonylphenyl ether and polyoxyethylene octylphenyl ether), and aliphatic diethanolamides. Further, as high-molecular dispersants, high-molecular compounds having a molecular weight of 1,000 or more are preferable. Examples include styrene-maleic acid resins, styrene-acrylic resins, rosins, BYK-160, BYK-162, BYK-164 and BYK-182 (urethane based high-molecular compounds manufactured by BYK-Chemie), EFKA-47 and LP-4050 (urethane based dispersants manufactured by EFKA), Solsperse 24000 (a polyester based high-molecular compound manufactured by Zeneca PLC), and Solsperse 17000 (an aliphatic diethanolamide based high-molecular compound manufactured by Zeneca PLC).

Other examples of the high-molecular pigment dispersant include random copolymers comprising a monomer that solvates with a solvent (such as lauryl methacrylate, stearyl methacrylate, 2-ethylhexyl methacrylate, and cetyl methacrylate), a monomer that hardly solvates with a solvent (such as methyl methacrylate, ethyl methacrylate, isopropyl methacrylate, styrene, and vinyltoluene), and a polar group-containing monomer; and the graft copolymers disclosed in JP-A-3-188469. Examples of the polar group-containing monomer include an acid group-containing monomer such as acrylic acid, methacrylic acid, itaconic acid, fumaric acid, maleic acid, styrenesufonic acid, and an alkali metal salt thereof; and a basic group-containing monomer such as dimethylamonoethyl methacrylate, diethylaminoethyl methacrylate, vinylpyridine, vinylpyrrolidone, vinylpiperidine, and vinyllactam. Further, styrene-butadiene copolymers and the block copolymers of styrene and a long chain alkyl methacrylate as disclosed in JP-A-60-10263 are enumerated. The graft copolymers disclosed in JP-A-3-188469 are preferred as the pigment dispersant.

The amount of the pigment dispersant used is preferably from 0.1 to 300 parts by weight based on 100 parts by weight of the surface-treated coloring agent. When the addition amount of the pigment dispersant is less than 0.1 parts by weight, the dispersing effect for the coloring agent is low, and hence, such is not preferred. On the other hand, even when it exceeds 300 parts by weight, no further improving effect is obtained.

In dispersing the surface-treated coloring agent (coloring component) in the non-aqueous dispersion medium, the following methods are enumerated as a method of using the pigment dispersant, and any of these methods can bring about the desired effects.
1. A coloring component composition obtained by previously mixing the surface-treated coloring agent with the pigment dispersant is added and dispersed in the non-aqueous solvent.
2. The surface-treated coloring agent and the pigment dispersant are individually added and dispersed in the non-aqueous solvent.
3. Dispersions previously obtained by individually dispersing the surface-treated coloring agent and the pigment dispersant in the non-aqueous solvent are mixed with each other.
4. The surface-treated coloring agent is dispersed in the non-aqueous solvent and then to the resulting coloring component dispersion is added the pigment dispersant.

The foregoing surface-treated coloring agent (coloring component) is mixed or dispersed in the non-aqueous solvent to prepare coloring component fine particles, preferably in the presence of the pigment dispersant. As machines for conducting the mixing or dispersion in the non-aqueous solvent, are employable a dissolver, a high-speed mixer, a homomixer, a kneader, a ball mill, a roll mill, a sand mill, and an attritor. The coloring component (such as a processed pigment) has an average particle size in the range of from 0.01 to 10 µm. The coloring component fine particle obtained by such a dispersing step preferably has an average particle size ranging from 0.01 to 1.0 µm.

Next, a step in which a monofunctional polymerizable monomer (M) is added to the dispersed coloring component fine particles as seed particles to conduct dispersion polymerization will be described.

A polymerization system comprising the coloring component fine particles, as seed particles, dispersed in a non-aqueous solvent, a monofunctional polymerizable monomer (M) and a dispersion stabilizer (P) is polymerized in the presence of a polymerization initiator to obtain colored resin particles having a coloring agent included therein according to the invention. It is preferred that the polymerizable monomer (M) is a polymerizable monomer that is soluble in the non-aqueous solvent but becomes insoluble in the non-aqueous solvent upon polymerization.

Specifically, there are enumerated polymerizable monomers represented by the following formula (I):

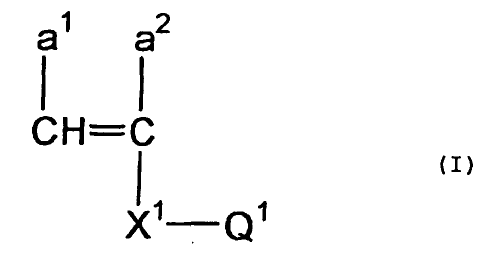

In formula (I), X¹ represents -COO-, -OCO-, -CH₂OCO-, -CH₂COO-, -O-, -CONHCOO-, -CONHOCO-, -SO₂-, -CON(Z¹)-, -SO₂N(Z¹)-, or a phenylene group (hereinafter sometimes referred to as "-Ph-"; the phenylene group includes a 1,2-phenylene group, a 1,3-phenylene group, and a 1,4-phenylene group). Z¹ represents a hydrogen atom or an optionally substituted aliphatic group having from 1 to 8 carbon atoms (such as a methyl group, an ethyl group, a propyl group, a butyl group, a 2-chloroethyl group, a 2-bromoethyl group, a 2-cyanoethyl group, a 2-hydroxyethyl group, a benzyl group, a chlorobenzyl group, a methylbenzyl group, a methoxybenzyl group, a phenethyl group, a 3-phenylpropyl group, a dimethylbenzyl group, a fluorobenzyl group, a 2-methoxyethyl group, and a 3-methoxypropyl group).

Q¹ represents a hydrogen atom or an optionally substituted aliphatic group having from 1 to 6 carbon atoms (such as a methyl group, an ethyl group, a propyl group, a butyl group, a 2-chloroethyl group, a 2,2-dichloroethyl group, a 2,2,2-trifluoroethyl group, a 2-bromoethyl group, a 2-hydroxyethyl group, a 2-hydroxypropyl group, a 2,3-dihydroxypropyl group, a 2-hydroxy-3-chloropropyl group, a 2-cyanoethyl group, a 3-cyanopropyl group, a 2-nitroethyl group, a 2-methoxyethyl group, a 2-methanesulfonylethyl group, a 2-ethoxyethyl group, a 3-bromopropyl group, a 4-hydroxybutyl group, a 2-furfurylethyl group, a 2-thienylethyl group, a 2-carboxyethyl group, a 3-carboxypropyl group, a 4-carboxybutyl group, a 2-carboxyamidoethyl group, a 3-sulfonamidopropyl group, a 2-N-methylcarboxyamidoethyl group, a cyclopentyl group, a chlorocyclohexyl group, and a dichlorohexyl group).

a¹ and a² may be the same or different and preferably each represents a hydrogen atom, a halogen atom (such as a chlorine atom and a bromine atom), a cyano group, an alkyl group having from 1 to 3 carbon atoms (such as a methyl group, an ethyl group, and a propyl group), -COO-L¹, or -CH₂-COO-L¹, wherein L¹ represents a hydrogen atom or an optionally substituted hydrocarbon group having not more than 10 carbon atoms (such as an alkyl group, an alkenyl group, an aralkyl group, and an aryl group).

Specific examples of the polymerizable monomer (M) include vinyl esters or allyl esters of aliphatic carboxylic acids having from 1 to 6 carbon atoms (such as acetic acid, propionic acid, butyric acid, monochloroacetic acid, and trifluoropropionic acid); optionally substituted alkyl esters or amides having from 1 to 4 carbon atoms of unsaturated carboxylic acids (such as acrylic acid, methacrylic acid, crotonic acid, itaconic acid, and maleic acid) (examples of the alkyl group include a methyl group, an ethyl group, a propyl group, a butyl group, a 2-chloroethyl group, a 2-bromoethyl group, a 2-hydroxyethyl group, a 2-cyanoethyl group, a 2-nitroethyl group, a 2-methoxyethyl group, a 2-methanesulfonylethyl group, a 2-benzenesulfonylethyl group, a 2-carboxyethyl group, a 4-carboxybutyl group, a 3-chloropropyl group, a 2-hydroxy-3-chloropropyl group, a 2-furfurylethyl group, a 2-thienylethyl group, and a 2-carboxyamidoethyl group); styrene derivatives (such as styrene, vinyltoluene, α-methylstyrene, vinylnaphthalene, chlorostyrene, dichlorostyrene, bromostyrene, vinylbenzenecarboxylic acid, vinylbenzenesulfonic acid, chloromethylstyrene, hydroxymethylstyrene, methoxymethylstyrene, vinylbenzenecarboxamide, and vinylbenzenesulfonamide); unsaturated carboxylic acids (such as acrylic acid, methacrylic acid, crotonic acid, maleic acid, and itaconic acid); cyclic acid anhydrides of maleic acid and itaconic acid; acrylonitrile; methacrylonitrile; and polymerizable double bond-containing heterocyclic compounds (specifically, the compounds described in *Polymer Data Handbook (Fundamental Edition),* pp.175-184, edited by The Society of Polymer Science, Japan and published by Baifukan Co., Ltd. (1986), such as N-vinylpyridine, N-vinylimidazole, N-vinylpyrrolidone, vinylthiophene, vinyltetrahydrofuran, vinyloxazoline, vinylthiazole, and N-vinylmorpholine).

The monofunctional polymerizable monomer (M) is preferably selected from those described above.

In the invention, other monomer components that are copolymerizable with the monofunctional polymerizable monomer (M) may be used jointly.

Examples of the other copolymerizable monomer component include a basic monomer (B) containing an amino group represented by the formula: -N(R¹) (R²) . In the colored resin particles of the invention, by using the copolymerizable amino group-containing basic monomer (B) as a copolymerization component together with the monofunctional polymerizable monomer (M), the surfaces of the particles themselves exhibit positive charges, thereby enhancing dispersion stability of the particles dispersed in the non-aqueous solvent. It is assumed that this is caused by charge repulsion effect generated when the particles come close to each other.

In the foregoing formula, R¹ and R² may be the same or different and preferably each represents a hydrogen atom, an optionally substituted alkyl group having from 1 to 22 carbon atoms (such as a methyl group, an ethyl group, a propyl group, a butyl group, a hexyl group, a heptyl group, an octyl group, a nonyl group, a decyl group, a dodecyl group, a tridecyl group, a tetradecyl group, a hexadecyl group, an octadecyl group, an eicosyl group, a docosyl group, a 2-chloroethyl group, a 2-bromoethyl group, a 2-cyanoethyl group, a 2-methoxycarbonylethyl group, a 2-methoxyethyl group, and a 3-bromopropyl group), an optionally substituted alkenyl group having from 4 to 18 carbon atoms (such as a 2-methyl-1-propenyl group, a 2-butenyl group, a 2-pentenyl group, a 3-methyl-2-pentenyl group, a 1-pentenyl group, a 1-hexenyl group, a 2-hexenyl group, a 4-methyl-2-hexenyl group, a decenyl group, a dodecenyl group, a tridecenyl group, a hexadecenyl group, an octadecenyl group, and a linoleyl group), an optionally substituted aralkyl group having from 7 to 12 carbon atoms (such as a benzyl group, a phenethyl group, a 3-phenylpropyl group, a naphthylmethyl group, a 2-naphthylethyl group, a chlorobenzyl group, a bromobenzyl group, a methylbenzyl group, an ethylbenzyl group, a methoxybenzyl group, a dimethylbenzyl group, and a dimethoxybenzyl group), an optionally alicyclic group having from 5 to 8 carbon atoms (such as a cyclohexyl group, a 2-cyclohexylethyl group, and a 2-cyclopentylethyl group), or an optionally substituted aromatic group having from 6 to 12 carbon atoms (such as a phenyl group, a naphthyl group, a tolyl group, a xylyl group, a propylphenyl group, a butylphenyl group, an octylphenyl group, a dodecylphenyl group, a methoxyphenyl group, an ethoxyphenyl group, a butoxyphenyl group, a decyloxyphenyl group, a chlorophenyl group, a dichlorophenyl group, a bromophenyl group, a cyanophenyl group, an acetylphenyl group, a methoxycarbonylphenyl group, an ethoxycarbonylphenyl group, a butoxycarbonylphenyl group, an acetamidophenyl group, a propionamidophenyl group, and a dodecyloylamidophenyl group).

Further, R¹ and R² may be taken together to form a ring, and specifically represent a ring-forming organic reside that may contain a hetero atom (such as an oxygen atom, a nitrogen atom, and a sulfur atom) . Examples of the cyclic amino group formed include a morpholino group, a piperidino group, a pyridinyl group, an imidazolyl group, and a quinolyl group. A plurality of the amino groups may be contained in the molecule of the basic monomer.

The basic monomer (B) is preferably used in an amount of from 1 to 45 % by weight, and more preferably from 3 to 30 % by weight based on the total amount of the polymerizable monomer (M).

Specific examples of the basic monomer (B) will be given below, but it should not be construed that the invention is limited thereto.

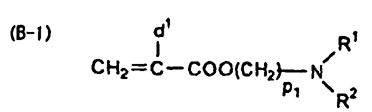

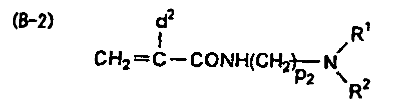

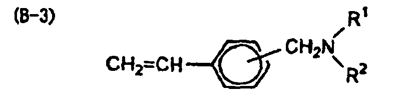

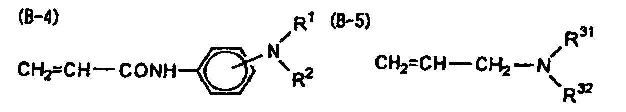

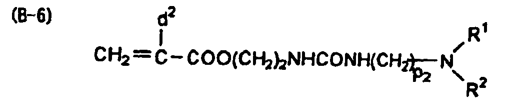

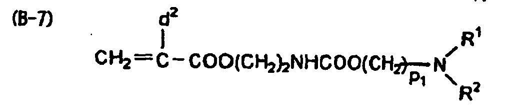

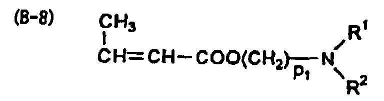

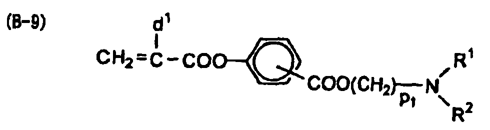

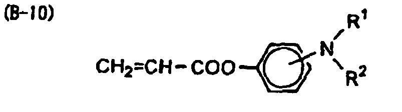

In the above formulae, d¹ represents -H, -CH₃, -Cl or -CN; p₁ represents an integer of from 2 to 12; d² represents -H or -CH₃; and p₂ represents an integer of from 2 to 4.

In the invention, as other monomers that are copolymerizable with the monofunctional monomer (M), an acidic monomer (A) containing at least one acid group selected from a -PO₃H₂ group, an -SO₃H group, and an -SO₂H group can be used jointly. The acidic monomer (A) may contain a plurality of the foregoing acid groups in the molecule thereof. In the colored resin particles of the invention, by using the acidic monomer (A) as a copolymerization component, the surfaces of the particles themselves reveal negative charges, thereby enhancing dispersion stability of the particles dispersed in the non-aqueous solvent.

The acidic monomer (A) is preferably used in an amount of from 1 to 45 % by weight, and more preferably from 3 to 30 % by weight based on the total amount of the polymerizable monomers (M).

Specific examples of the acidic monomer (A) will be given below, but it should not be construed that the invention is limited thereto. In the following specific examples, Y represents an -SO₃H group, an -SO₂H group, a -PO₃H₂ group, or an -OPO₃H₂ group. 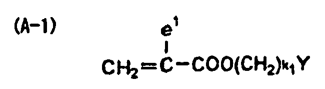 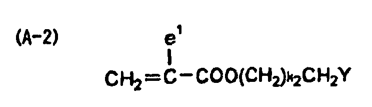
(A-3) CH₂=CH-- (CH₂)₁Y

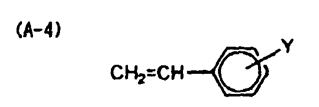

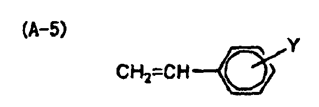

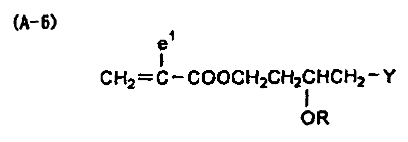

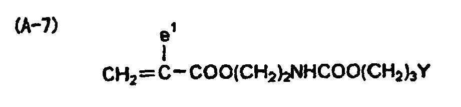

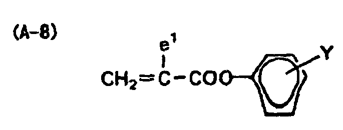

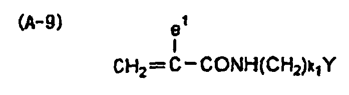

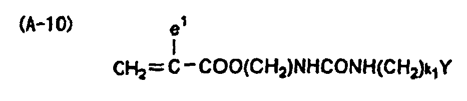

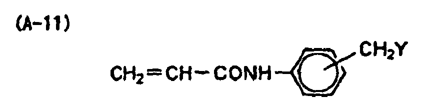

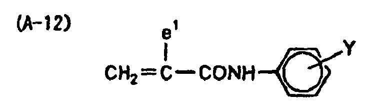

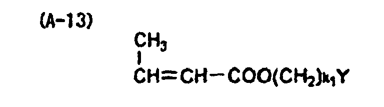

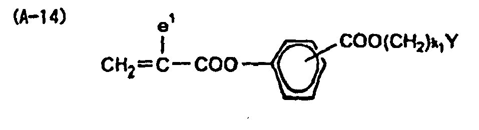

In the above formulae, e¹ represents -H or -CH₃; k₁ represents an integer of from 2 to 12; k₂ represents an integer of from 1 to 11; r represents 0 or 1; and R represents -H or an alkyl group having from 1 to 10 carbon atoms.

Further, in the invention, a monomer (L) containing a long chain aliphatic group, which is copolymerizable with the monofunctional polymerizable monomer (M), can be used jointly as other monomer. By using the long chain aliphatic group-containing monomer (L), dispersion stability and redispersibility of the colored resin particles are further enhanced. This is assumed that the copolymerization component corresponding to the monomer (L) orients in the surface portion of the particle due to high solvation with the solvent, whereby solvation of the surface of the particle itself with the solvent is enhanced, resulting in restrain of coagulation and precipitation of the particle.

The long chain aliphatic group is preferably an aliphatic group having 7 or more carbon atoms. Specific examples thereof include esters of unsaturated carboxylic acids (such as acrylic acid, α-fluoroacrylic acid, α-chloroarylic acid, α-cyanoacrylic acid, methacrylic acid, crotonic acid, maleic acid, and itaconic acid) containing an aliphatic group having from 10 to 32 carbon atoms in total (the aliphatic group may contain a substituent such as a halogen atom, a hydroxyl group, an amino group, and an alkoxy group, or in which the carbon-carbon bond in the main chain thereof may contain a hetero atom such as an oxygen atom, a sulfur atom, and a nitrogen atom) (examples of the aliphatic group include a decyl group, a dodecyl group, a tridecyl group, a tetradecyl group, a hexadecyl group, an octadecyl group, a docosyl group, a dodecenyl group, a hexadecenyl group, an oleyl group, a linoleyl group, and a docosenyl group); amides of the foregoing unsaturated carboxylic acids (examples of the aliphatic group are the same as enumerated above for the esters); vinyl esters or allyl esters of higher fatty acids (examples of higher fatty acids include lauric acid, myristic acid, stearic acid, oleic acid, linolic acid, and behenic acid) ; and vinyl ethers in which an aliphatic group having from 8 to 32 carbon atoms in total is bound to an oxygen atom (examples of the aliphatic group are the same as enumerated above for the unsaturated carboxylic acid esters).

In the case where the monomer (L) is used, the amount of the monomer (L) is preferably from 0.5 to 20 % by weight, and more preferably from 1 to 15 % by weight based on the whole of the monomers.

Next, the dispersion stabilizer (P) will be described.

It is preferred that the dispersion stabilizer (P) has a segment that solvates with the non-aqueous solvent and a segment that hardly solvates with the non-aqueous solvent and is liable to associate with or adsorb on the resin particles formed by the polymerization. The dispersion stabilizers (P) are described in detail in, for example, K.J. Barrett, *Dispersion Polymerization in Organic Media,* Chapter 3, "The Design and Synthesis of Dispersants for Dispersion Polymerization in Organic Media", published by John Willy & Sons. Examples of monomer that solvates with the solvent include lauryl methacrylate, stearyl methacrylate, 2-ethylhexyl methacrylate, and cetyl methacrylate. Examples of monomer that hardly solvates with the solvent and is liable to adsorb on the resin particles after the polymerization include methyl methacrylate, ethyl methacrylate, isopropyl methacrylate, styrene, and vinyltoluene.

Further, various known amphipathic resins that are used in liquid developers can be used as the dispersion stabilizer (P). Specific examples thereof include the graft copolymer type dispersion stabilizers (P) as disclosed in JP-A-4-350669 and JP-A-5-188657; the block copolymer type dispersion stabilizers (P) as disclosed in JP-A-6-95436; non-aqueous solvent-soluble random copolymer type dispersion stabilizers (P) containing graft groups as disclosed in JP-A-11-43638; the partially crosslinked polymer type dispersion stabilizers (P) as disclosed in JP-A-10-316917; and the partially crosslinked polymer type dispersion stabilizers (P) containing a graft group in the terminal of the main chain thereof as disclosed in JP-A-10-316920. However, it should not be construed that the dispersion stabilizer (P) is limited thereto.

As preferred examples of the dispersion stabilizer (P), are enumerated the following graft copolymers as disclosed in JP-A-4-350669 and JP-A-5-188657. Specifically, graft copolymers comprising at least one macromonomer (MM) having a weight average molecular weight of from 1 × 10³ to 1 × 10⁵, which has a polymerizable double bond group represented by the following formula (III) bonded in the terminal of the main chain of a polymer containing at least one polymer component represented by the following formula (IIa) or (IIb), and at least one monomer represented by the following formula (IV) are preferred.

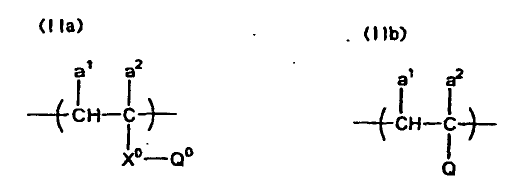

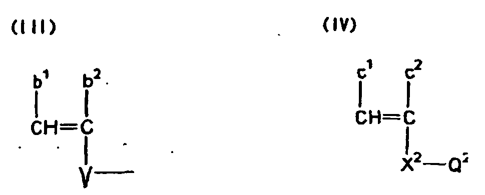

In formula (IIa), a¹, a² and X¹ have the same meanings as defined for a¹, a² and X¹ in formula (I) described above. Q⁰ represents an aliphatic group having from 1 to 22 carbon atoms.

In formula (IIb), Q represents -CN or an unsubstituted or substituted phenyl group. Examples of the substituent include a halogen atom, an alkoxy group, or -COOZ² (wherein Z² represents an alkyl group, an aralkyl group, or an aryl group) . a¹ and a² have the same meanings as defined for a¹, a² and X¹ in formula (I).

In formula (III), V has the same meaning as defined for X¹ in formula (I) . b¹ and b² may be the same or different and have the same meanings as defined for a¹ and a² in formula (I) .

In formula (IV), X¹ has the same meaning as defined for X¹ in formula (I); and Q² represents an aliphatic group having from 1 to 22 carbon atoms or an aromatic group having from 6 to 12 carbon atoms. c¹ and c² may be the same or different and have the same meanings as defined for a¹ and a² in formula (I).

However, in the case where the graft copolymer comprises the macro monomer represented by formula (IIa) and the monomer component represented by formula (IV), at least one of Q⁰ and Q² represents an aliphatic group having from 4 to 22 carbon atoms. Further, in the case where the graft copolymer comprises the macro monomer represented by formula (IIb) and the monomer component represented by formula (IV), Q² represents an aliphatic group having from 4 to 22 carbon atoms.

Specific examples of the macromonomer (MM) and preferred examples of the graft copolymer type dispersion stabilizer (P) according to the invention will be given below.

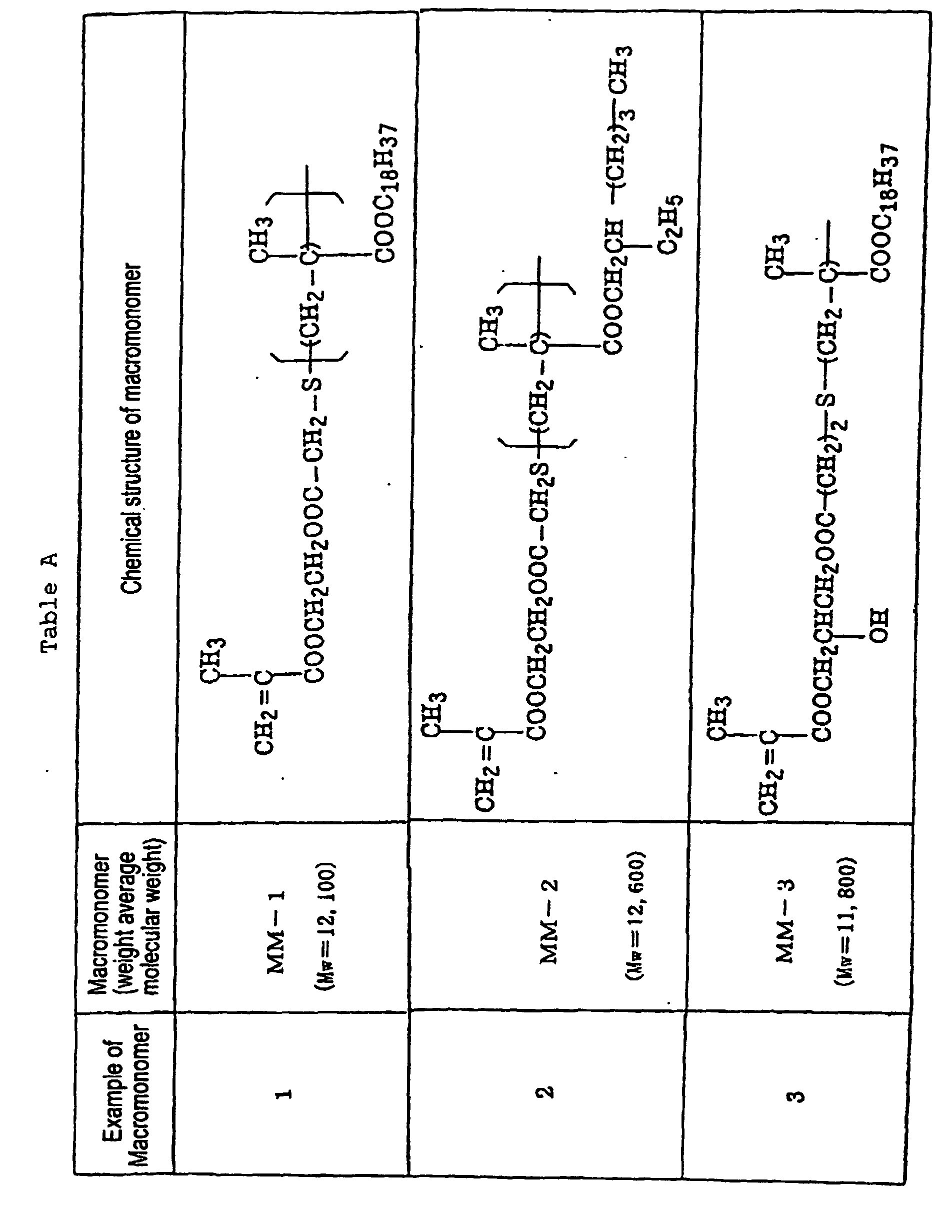

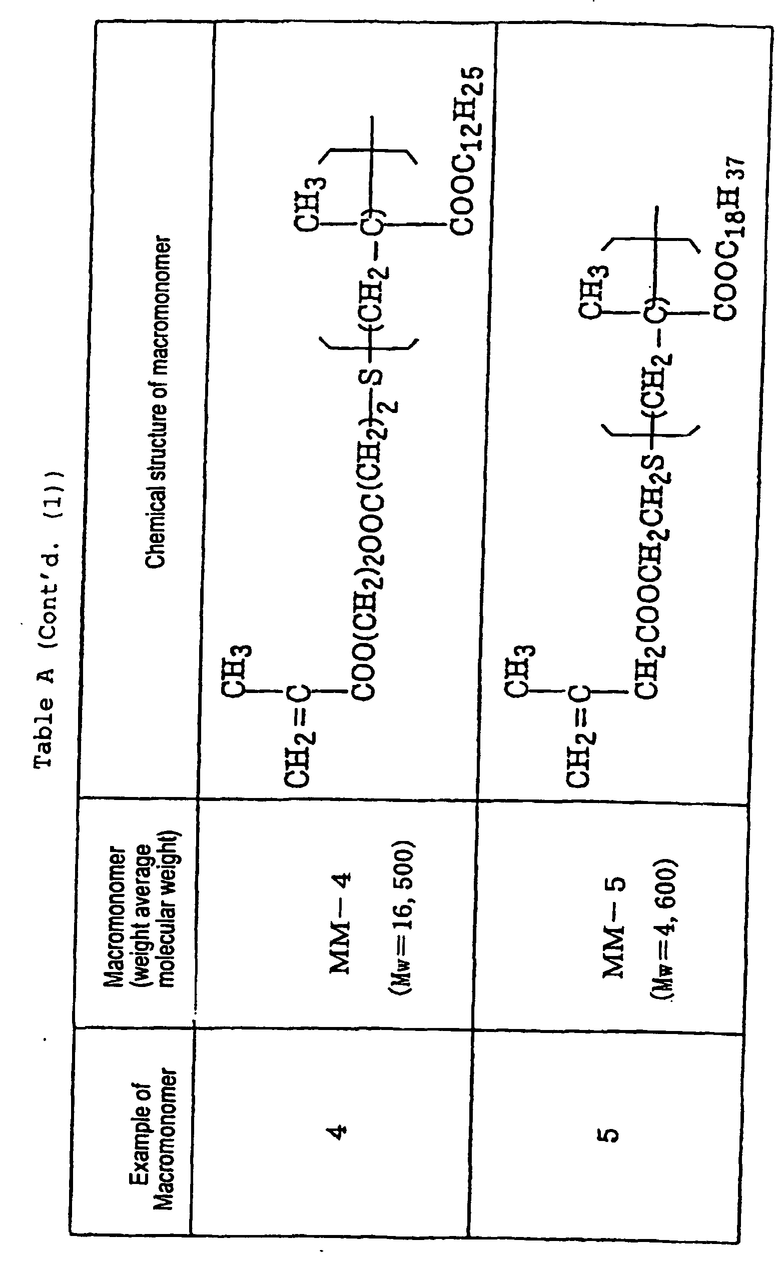

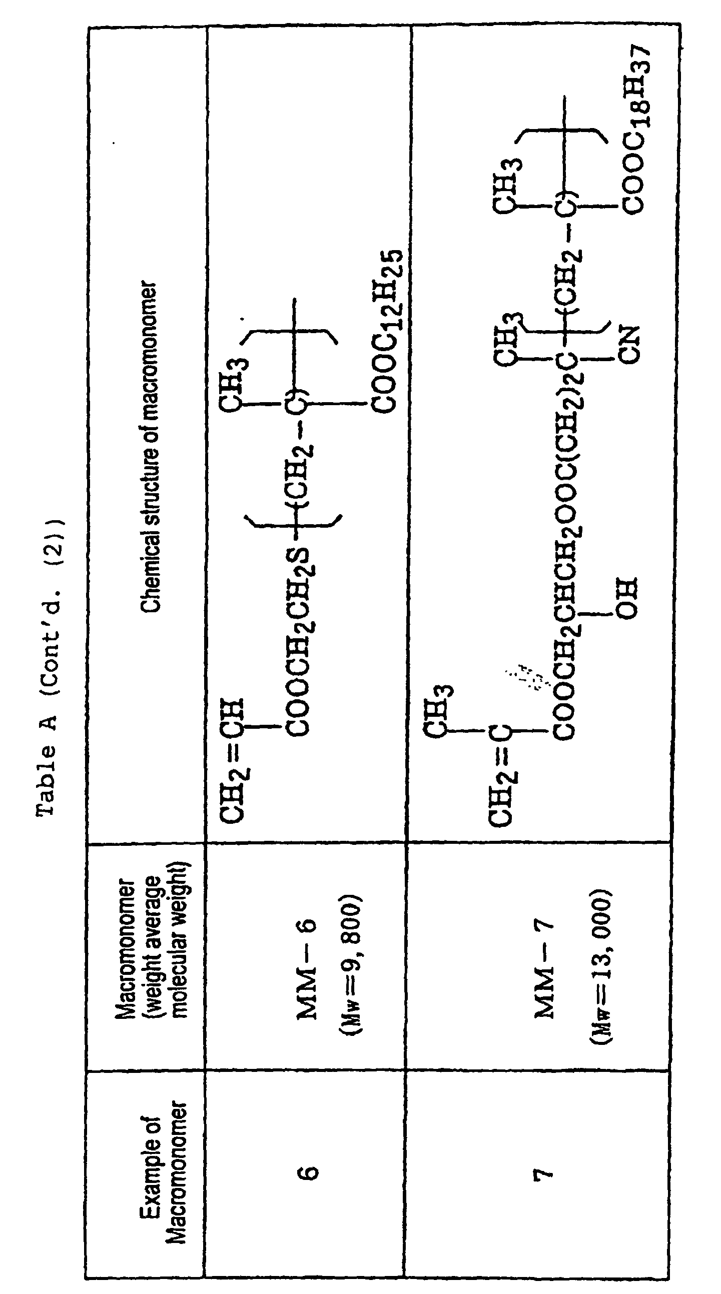

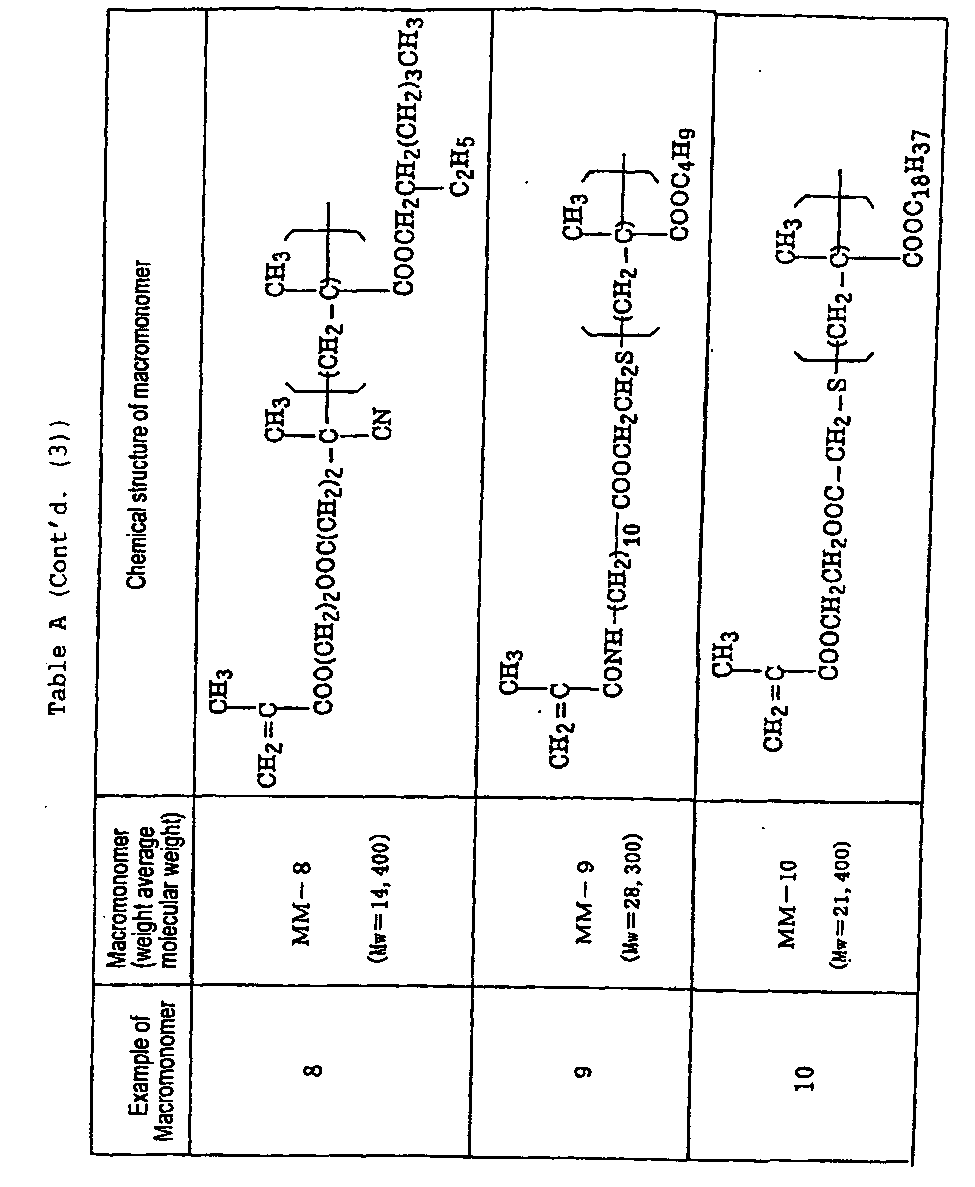

Dispersion stabilizer (P-1)
- Styrene/macromonomer (MM-1) = 50/50 (wt/wt)
- Weight average molecular weight: 43,000

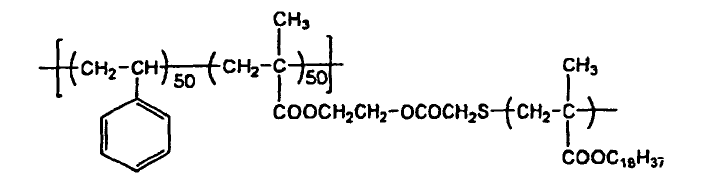

The copolymerization ratio is represented by a weight ratio.

**Table B**

| Specific example of dispersion stabilizer | Monomer (Corresponding to styrene) | Macromonomer | Monomer/macromonomer (wt/wt) | Weight average molecular weight of dispersion stabilizer |
|---|---|---|---|---|
| P-2 | Styrene | MM-1 | 30/70 | 28,000 |
| P-3 | Styrene | MM-1 | 70/30 | 38,000 |
| P-4 | Styrene | MM-2 | 30/70 | 39,000 |
| P-5 | Styrene | MM-2 | 50/50 | 40,000 |
| P-6 | Styrene | MM-3 | 50/50 | 46,000 |
| P-7 | Styrene | MM-4 | 30/70 | 101,000 |
| P-8 | Styrene | MM-6 | 50/50 | 82,000 |
| P-9 | Styrene | MM-8 | 10/90 | 33,000 |
| P-10 | MMA | MM-1 | 30/70 | 55,000 |
| P-11 | MMA | MM-1 | 10/90 | 47,000 |
| P-12 | MMA | MM-2 | 20/80 | 50,000 |
| P-13 | MMA | MM-7 | 30/70 | 56,000 |
| P-14 | Styrene | MM-10 | 50/50 | 36,000 |
| P-15 | Styrene | MM-10 | 70/30 | 32,000 |

| | | | | |
|---|---|---|---|---|
| * MMA: Methyl methacrylate | | | | |

**Table C**

| Specific example of dispersion stabilizer | Monomer (Corresponding to styrene) | Macromonomer | Monomer/macromonomer (wt/wt) |
|---|---|---|---|
| P-16 | SMA | AS-6 | 80/20 |
| P-17 | LMA | AS-6 | 50/50 |
| P-18 | 2EHMA | AS-6 | 70/30 |
| P-19 | 2EHMA | AS-6 | 50/50 |
| P-20 | SMA | AS-6 | 90/10 |
| P-21 | 2EHMA | AS-6 | 90/10 |
| P-22 | BMA | AS-6 | 70/30 |
| P-23 | SMA | AS-2 | 90/10 |
| P-24 | 2EHMA | AS-2 | 90/10 |
| P-25 | 2EHMA | AS-2 | 80/20 |

| | | | |
|---|---|---|---|
| * SMA: Stearyl methacrylate LMA: Lauryl methacrylate 2EHMA: 2-Ethylhexyl methacrylate BMA: Butyl methacrylate | | | |

AS-6, AA-6 and AA-2 are each a methacryloyl group-terminated macro monomer manufactured by Toagosei Co., Ltd.; AS-6 is a styrene based macro monomer (number average molecular weight: 6,000), and AA-6 and AA-2 are a methyl methacrylate based macro monomer having a number average molecular weight of 6,000 and 2,000, respectively.

The dispersion stabilizers as shown in Table C each had a weight average molecular weight of from about 40,000 to 80,000.

For preparing the colored resin particles having a coloring agent included therein according to the invention, a method is employed wherein a polymerization system comprising the monofunctional polymerizable monomer (M) and the dispersion stabilizer (P) added to a non-aqueous solvent containing seed particles (coloring component fine particles) prepared by finely dispersing the surface-treated coloring agent (coloring component) is polymerized in the presence of a polymerization initiator such as benzoyl peroxide, azobis(2,9-dimethylvaleronitrile), azobis(4-methoxy-2,4-dimethylvaleronitrile), azobisisobutyronitrile, and butyllithium may be employed.

Specifically, in order to add the polymerizable monomer, the dispersion stabilizer (P) and the polymerization initiator to a non-aqueous solvent containing seed particles prepared by finely dispersing the surface treated coloring agent, there are various methods including, for example, the following methods:
(1) A method in which a solution prepared by mixing and dissolving the polymerizable monomer (M), the dispersion stabilizer (P) and the polymerization initiator in the non-aqueous solvent is added dropwise, collectively or dividedly to a non-aqueous solvent containing seed particles prepared by finely dispersing the coloring component.
(2) A method in which a solution having the dispersion stabilizer (P) dissolved therein is added to a non-aqueous solvent containing seed particles prepared by finely dispersing the coloring component, then are added thereto dropwise, collectively or dividedly the polymerizable monomer (M) and the polymerization initiator.
(3) A method in which a part of a solution prepared by mixing and dissolving the polymerizable monomer (M), the dispersion stabilizer (P) and the polymerization initiator in the non-aqueous solvent is added to a non-aqueous solvent containing seed particles prepared by finely dispersing the coloring component to conduct dispersion polymerization, and then the remaining mixture of the polymerizable monomer (M), the dispersion stabilizer (P) and the polymerization initiator is then appropriately added.
(4) A method in which a part of the polymerizable monomer (M) is added to a non-aqueous solvent containing seed particles prepared by finely dispersing the coloring component to promote absorption of the monomer (M) on the seed particles, and then the remaining polymerizable monomer (M), the dispersion stabilizer (P) and the polymerization initiator are added dropwise, collectively or dividedly.

Any of these methods may be used for the preparation of the colored resin particles according to the invention.

Next, the amount of each of the components for forming the colored resin particles having a coloring agent included therein will be described.

A proportion of the seed particles (coloring component fine particles) to the total amount of the polymerizable monomers (including monomer (M) and optionally, monomers (B), (A) and/or (L)) is preferably from 5/95 to 95/5 by weight, and more preferably from 10/90 to 80/20 by weight. A charge amount of the total polymerizable monomers is from about 5 to 80 parts by weight, and preferably from 10 to 50 parts by weight based on 100 parts by weight of the non-aqueous solvent. An amount of the soluble dispersion stabilizer (P) is from 1 to 100 parts by weight, and preferably from 3 to 50 parts by weight based on 100 parts by weight of the total monomers. An amount of the polymerization initiator is suitably from 0.1 to 5 % by mole based on the total monomers. Further, the polymerization temperature is from about 20 to 180 °C, and preferably from 30 to 120 °C. The reaction time is preferably from 1 to 15 hours.

In the case where an aromatic hydrocarbon such as toluene or xylene remains in the non-aqueous solvent used for the reaction, in the case where the foregoing polar solvent such as alcohol, ketone, ether, or ester is used jointly, or in the case where an unreacted product of the monomer to be subjected to granulation polymerization remains, it is preferred to remove such a material by distillation with heating over a boiling point of such a material or vacuum distillation.

The thus prepared non-aqueous dispersion of colored resin particles having a coloring agent included therein is excellent in that the coloring agent is uniformly dispersed in the state of fine particles and in its dispersion stability and hence, can provide an oil based ink for inkjet printer, which is free from clogging in a nozzle section and has high discharge stability. Further, the resulting ink is excellent in drying property on recording paper and water resistance and light fastness of recorded images, and has high-level scratch resistance. In addition, it is possible to easily obtain colored resin particles having a coloring agent included therein uniformly dispersed in the state of fine particles in a non-aqueous solvent. Thus, the invention provides an oil based ink for inkjet printer excellent in control of charge polarity and stability of charge with the lapse of time, and an inexpensive production process thereof. Further, the invention is characterized in that functions such as fixing property and charge property can be imparted to the colored resin particles having a coloring agent included therein by appropriately choosing the polymerizable monomer.

In the following embodiments, how the ink composition of the invention is useful as an oil based ink for inkjet printer is described. As- the inkjet printer, a printer of piezoelectric system or a printer of electrostatic system is used for illustration. However, the invention is not limited to such system, and can be also applied to inkjet printers of thermal system and slit jet system represented by NTT.

An electrostatic inkjet printer is described below.

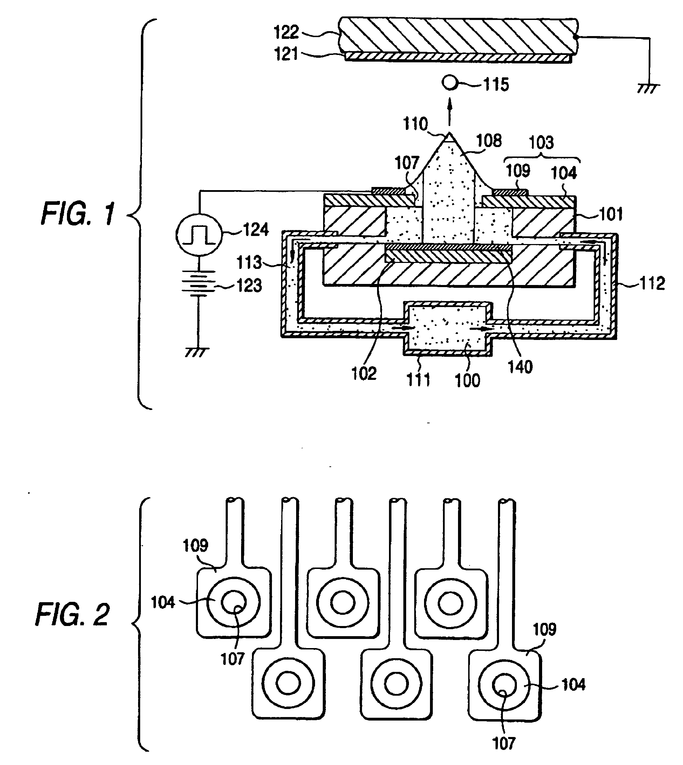

Figs. 1 and 2 are schematic views showing an embodiment of a discharge head. Fig. 1 is a view of an inkjet head and particularly shows a cross-section of an ejection electrode corresponding to recording dot. In Fig. 1, an ink 100 is fed between a head plate 102 and an ejection electrode plate 103 through an ink supply passage 112 connected to a head block 101 from a circulation mechanism 111 including a pump and recovered in the ink circulation mechanism 111 through an ink recovery passage 113 formed in the head block 101. The ejection electrode plate 103 is constructed of an insulating plate 104 having a through-hole 107 and an ejection electrode 109 formed around the through-hole 107 toward a recording medium. On the other hand, a convex ink guide 108 is disposed approximately in the center of the through-hole 107 on the head plate102. The convex ink guide 108 is made of an insulating member such as plastic resin or ceramics. Each convex ink guide is disposed at the line spacing and pitch so that the center thereof corresponds to the center of each through-hole 107, and kept on the head plate102 by the prescribed method. Each convex ink guide 108 has a shape such that a tip of flat plate having a constant thickness is cut out into a triangular or trapezoidal shape, and the tip section thereof forms an ink droplet ejecting position 110. Each convex ink guide 108 may form a slit-like groove from its tip section, and ink supply into the ink ejecting position 110 is smoothly conducted by capillarity of the slit, thereby enabling to enhance the recording frequency. Further, an appropriate surface of the ink guide may have conductivity, if desired. In this case, by making the conductive portion in an electrically floating state, it is possible to effectively form an electrical field at the ink ejecting position by applying a low voltage to the election electrode. Each convex ink guide 108 protrudes approximately vertically from the corresponding through-hole by a prescribed distance in the direction of ink droplet ejection. A recording medium 121 such as recording paper is placed toward the tip of the convex ink guide 108, and a counter electrode 122 functioning also as a role of a platen guiding the recording medium 121 is disposed on the back surface of the recording medium 121 in relation to the head plate 102. Also, a migration electrode 140 is formed in the bottom portion of a space formed by the head plate 102 and the ejection electrode plate 103. By applying a prescribed voltage to the migration electrode 140, the charged particles in the ink are subjected to electrophoresis in the direction of discharge position in the ink guide, thereby enabling to enhance responsibility of discharge.

Next, a specific constructional embodiment of the ejection electrode plate 103 in a line scanning type multi-channel inkjet head is described with reference to Fig. 2. Fig. 2 is a view of the ejection electrode plate looking from the side of the recording medium 121, in which a plurality of ejection electrodes are aligned in two lines in an array form in the main scanning direction, the through-hole 107 is formed in the center of each ejection electrode, and the individual ejection electrode 109 is formed around the through-hole 107. In this embodiment, the inner diameter of the ejection electrode 109 is larger than the diameter of the through-hole 107, but it may be equal to the diameter of the through-hole 107. The insulating plate 104 is made of polyimide having a thickness of from about 25 to 200 µm, the ejection electrode 109 is made of a copper foil having a thickness of from about 10 to 100 µm, and the inner diameter of the though-hole 107 is from about 50 to 250 µm.

Next, recording action of an electrostatic inkjet recording device is described. An embodiment where a positively charged ink is used is described, but it should not be construed that the invention is limited thereto. At the time of recording, the ink 100 fed from the ink circulation mechanism 111 through the ink supply passage 112 is fed into the ink ejecting position 110 of the tip of the convex ink guide 108 from the through-hole 107, and a part of the ink 100 is recovered in the ink circulation mechanism 11 through the ink recovery passage 113. A voltage of, e.g., +1.5 kV as a continuous bias is applied to the ejection electrode from a bias voltage source 123, and when turning on, a pulse voltage of, e. g. , +500 V as a signal voltage corresponding to an image signal from a signal voltage source 124 is superimposed to the ejection electrode 109. Further, during this period of time, a voltage of +1.8 kV is applied to the migration electrode 140. On the other hand, the counter electrode 122 provided on the back side of the recording medium 121 is set up at a ground voltage of 0 V as shown in Fig. 1. If desired, the side of the recording medium 121 may be charged, for example, at -1.5 kV, for applying as a bias voltage. In such a case, an insulating layer is provided on the surface of the counter electrode 122, the recording medium is charged by a corona discharger, a scorotron charger, a solid ion generator, etc., the ejection electrode 109 is, for example, grounded, and when turning on, a pulse voltage of, e.g., +500 V as a signal voltage corresponding to an image signal from the signal voltage source 124 is superimposed to the ejection electrode 109. Further, during this period of time, a voltage of +200 V is applied to the migration electrode 140. When the ejection electrode 109 is in the turn-on state (in the state where 500 V is applied), and a voltage of 2 kV in total (the pulse voltage of 500 V is superimposed to the bias voltage of 1.5 kV) is applied, an ink droplet 115 is ejected from the ink ejecting position 110 of the tip of the convex electrode 108, drawn in the direction of the counter electrode 122, and reaches the recording medium 121 to form an image.

For precisely controlling flight of the ink droplet after discharge to dot placement accuracy on the recording medium, there are often taken measures such as provision of an intermediate electrode between the ejection electrode and the recording medium and provision of a guard electrode for suppressing electric field interference between the ejection electrodes. In this embodiment, as a matter of course, such measures are suitably employable, if desired. Further, a porous body may be provided between the head plate 102 and the ejection electrode plate 103. In this case, not only influence by a change of ink inner pressure due to movement of the inkjet head, etc. can be prevented, but also ink supply into the through-hole 107 after ejection of the ink droplet can be rapidly achieved. Accordingly, ejection of the ink droplet 115 is stabilized, whereby a good image having a uniform density can be recorded at a high speed on the recording medium 121.

The invention will be hereunder described with reference to the following Examples.

### Example 1:

### <Preparation of pigment dispersion>

A 20 % solution prepared by dissolving a dispersion stabilizer (P-1) in Isopar H upon heating was used as a pigment dispersant. The pigment dispersant solution (88.25 parts by weight), 17.65 parts by weight of rosin ester resin-treated Microlith Black C-T (manufactured by Ciba Speciality Chemicals) as a black processed pigment, 29.4 parts by weight of Isopar H, and 250 parts by weight of glass beads were mixed in a paint shaker (manufactured by Toyo Seiki K.K.) for 30 minutes. After filtering off the glass beads, the residue was dispersed for 3 hours in a high-speed dispersion kneading machine, Dynomill (trade name: KDL) at a number of revolution of 3,000 rpm. Glass beads, MK-3GX were used as media. The volume average particle size of pigment particles in the resulting dispersion was measured by ultra-centrifugal automatic particle size distribution analyzer, CAPA700 (manufactured by Horiba, Ltd.). As a result, it was found that the pigment particles were well dispersed to 0.17 µm.

### <Preparation of colored resin particles>

In a four-necked flask was charged 85.8 g of the filtrate of the processed pigment dispersion (solids content: 23. 3 %) from which the glass beads had been filtered off, which was then heated with stirring in a nitrogen gas stream at a temperature of 80 °C for 3 hours.

Next, a solution prepared by adding 1.1 g of 2,2'-azobis(2,4-dimethylvaleronitrile) to a mixed solution of 8 g of the foregoing dispersion stabilizer (P-1) as a powder, 13.3 g of methyl methacrylate, 26.7 g of methyl acrylate and 120 g of Isopar H as a feed solution was dropwise added at a dropping rate of 2.5 mL/min. to the processed pigment dispersion and allowed to react for 3 hours. About 20 minutes after initiation of the dropwise addition, heat generation started, and the temperature of the reaction mixture rose by about 5 °C. After the reaction for 3 hours, the temperature was elevated to 90 °C, the reaction mixture was stirred for 2 hours, and the unreacted monomers were distilled off. After cooling, the reaction mixture was filtered through a 200-mesh nylon cloth, and the resulting black resin particle dispersion had a degree of polymerization of 98 % and an average volume particle size of 0.26 µm. The resulting black resin particle dispersion exhibited a good dispersion state even after preservation by standing for one month.

The black resin particle dispersion was observed by an S-800 model, field emission scanning electron microscope (manufactured by Hitachi, Ltd.). As a result, it was noted that the Microlith Black pigment particles of about 100 nm grew to spherical resin particles of about 180 nm after the dispersion polymerization and that the monomers were absorbed on the seed pigment particles and caused polymerization.

In addition, the black particle dispersion was observed by a transmission scanning electron microscope. As a result, it was noted that the seed pigment particles were included in the spherical colored resin particles of about 180 nm after the dispersion polymerization.

In the light of the above, it can be understood that the colored resin particles formed by seed dispersion polymerization of the invention are colored resin particles containing the rosin ester resin-treated pigment therein.

### <Preparation of ink composition (IJ-1)>

The foregoing colored resin particle dispersion was once concentrated by solvent distillation and then diluted with Isopar G to prepare an ink composition (IJ-1) having a viscosity of 13 cp (measured at a temperature of 25 °C using an E type viscometer) and a surface tension of 23 mN/m (measured at a temperature of 25 °C using an automatic surface tensiometer manufactured by Kyowa Interface Science Co., Ltd.).

The ink composition (IJ-1) was charged in a color facsimile, SAIYUKI UX-E1CL (manufactured by Sharp Corporation) as an inkjet recording unit, and a picture was drawn on an exclusive paper of inkjet paper high-grade manufactured by Fuji Photo Film Co., Ltd. As a result, discharge was stably conducted without causing nozzle clogging. The resulting picture image was free from bleeding and good and clear such that the image density was 1.8. Next, a full solid pattern was printed, the prints were dried, and the solid portion was rubbed by fingers. As a result, staining on the fingers was not visually observed at all, so that it was noted that the scratch resistance was extremely excellent. Even after preservation for 6 months at room temperature, the ink composition was free from sedimentation and coagulation and extremely good in dispersibility, and could be continuously used for printing for one month to give prints having excellent clearness.

### Example 2:

### <Preparation of pigment dispersion and colored resin particles>

The same reaction operations as in Example 1 were followed, except that a first stage feed solution containing the same polymerizable monomer, dispersion stabilizer (P) and polymerization initiator as in Example 1 was added at a dropping rate of 2.5 mL/min. to the processed pigment dispersion and allowed to react for 2 hours; a second stage feed solution having the same composition as above was further added at a dropping rate of 2.5 mL/min. thereto and allowed to react for 2 hours; finally, a third feed solution having the same composition as above was further added at a dropping rate of 2.5 mL/min. thereto and allowed to react for 3 hours. The temperature of the reaction mixture rose by about 6 °C by the first stage seed polymerization, about 4 °C by the second stage seed polymerization and about 2 °C by the third stage seed polymerization, respectively. After completion of the reaction, the temperature was elevated to 90 °C, the reaction mixture was stirred for 2 hours, and the unreacted monomers were distilled off. After cooling, the reaction mixture was filtered through a 200-mesh nylon cloth, and the resulting black resin particle dispersion had a degree of polymerization of 96 % and an average volume particle size of 0.30 µm. The resulting black resin particle dispersion exhibited a good dispersion state even after preservation by standing for one month. The black resin particle dispersion was observed by a scanning electron microscope (manufactured by Hitachi, Ltd.). As a result, uniform spherical colored resin particles of about 250 nm were observed, and the monomers by the three stages were absorbed within the seed pigment particles and caused polymerization.

### <Preparation of ink composition (IJ-2)>

An ink composition (IJ-2) having a surface tension of 23 mN/m was prepared in the same manner as in Example 1, except that the concentration of the black resin particle dispersion was changed to adjust the viscosity at 13 cp.

The ink composition (IJ-2) was provided for printing in the same manner as in Example 1 using a color facsimile, SAIYUKI UX-ELCL (manufactured by Sharp Corporation). As a result, bleeding-free clear prints having a good quality were obtained. Further, scratch resistance was examined in the same manner as in Example 1. As a result, staining on the fingers was not visually observed at all, so that it was noted that the scratch resistance was extremely excellent. Even after preservation for 6 months at room temperature, the ink composition was free from sedimentation and coagulation and good in dispersibility.

### Comparative Example 1:

### <Preparation of comparative pigment dispersion>

Five parts by weight of Alkali Blue as a blue pigment, which had not been subjected to the surface treatment according to the invention, 5 parts by weight of a lauryl methacrylate/acrylic acid copolymer (composition ratio: 95/5 by weight) as a pigment dispersant, 90 parts by weight of Isopar H, and 250 parts by weight of glass beads were mixed in a paint shaker (manufactured by Toyo Seiki K.K.) for 30 minutes. After filtering off the glass beads, the residue was dispersed for 3 hours in a high-speed dispersion kneading machine, Dynomill (trade name: KDL) at a number of revolution of 3,000 rpm. The volume average particle size of pigment particles in the resulting dispersion was measured by ultra-centrifugal automatic particle size distribution analyzer, CAPA700 (manufactured by Horiba, Ltd.). As a result, it was found that the pigment particles were well dispersed to 0.13 µm.

### <Preparation of comparative colored resin particles>

In a four-necked flask was charged 208.3 of the filtrate of the pigment dispersion (solids content: 9.6 %) from which the glass beads had been filtered off, which was then heated with stirring in a nitrogen gas stream at a temperature of 80 °C for 3 hours. Next, a solution prepared by adding 1.1 g of 2,2'-azobis(2,9-dimethylvaleronitrile) to a mixed solution of 8 g of the dispersion stabilizer resin (P-1), 13.3 g of methyl methacrylate, 26.7 g of methyl acrylate and 120 g of Isopar H as a feed solution was dropwise added at a dropping rate of 2 .5 mL/min. to the pigment dispersion and allowed to react for 3 hours in the same manner as in Example. 1. About 15 minutes after initiation of the dropwise addition, heat generation started, and the temperature of the reaction mixture rose by about 5 °C. Coarse particles were adhered to the wall surface of the flask, and after the reaction, a large amount of precipitate was found in the bottom of the flask. The colored resin particles could not be provided for the subsequent preparation of ink composition because the coarse particles and precipitate were formed.

It was understood from the results of Examples 1 and 2 and Comparative Example 1 that since the polymer-treated pigment according to the invention is made in the state of fine particles and have good dispersibility, seed dispersion polymerization proceeds good, and the colored resin particles containing the polymer-treated pigment formed by the seed dispersion polymerization have good ink characteristics such as distinct printed image quality, extremely excellent scratch resistance and good long-term dispersibility.

### Example 3:

### <Preparation of pigment dispersion>

One hundred parts by weight of Carbon Black #30 (manufactured by Mitsubishi Chemical Corporation) as a black pigment and 200 parts by weight of a methyl methacrylate/stearyl methacrylate copolymer (molar ratio: 9/1) were previously pulverized and well mixed in a trio blender, and then melt kneaded in a three-roll mill for 20 minutes upon heating at 120 °C. Thereafter, the pigment kneaded mixture was pulverized in a pin mill.

Next, 10 parts by weight of the pigment kneaded mixture, 65 parts of Isopar G, 25 parts by weight of a 20 wt % solution prepared by dissolving Solprene 1205 (styrene/butadiene copolymer, manufactured by Asahi Kasei Corporation) as a pigment dispersant in Isopar G upon heating, and 250 parts by weight of 3G-X glass beads were mixed in a paint shaker (manufactured by Toyo Seiki K.K.) for 60 minutes. Next, after filtering off the glass beads, the residue was dispersed for 3 hours in a high-speed dispersion kneading machine, Dynomill (trade name: KDL) at a number of revolution of 3, 000 rpm. Media were glass beads MK-3GX. The volume average particle size of pigment particles in the dispersion was measured by ultra-centrifugal automatic particle size distribution analyzer, CAPA700 (manufactured by Horiba, Ltd.). As a result, it was found that the pigment particles were well dispersed to 0.21 µm.

### <Preparation of colored resin particles>

In a four-necked flask was charged 214.3 g of the filtrate of the pigment dispersion (solids content: 14.2 %) from which the glass beads had been filtered off, which was then heated with stirring in a nitrogen gas stream at a temperature of 50 °C for 1 hour. Next, a solution prepared by adding 0.7 g of 2,2'-azobis(4-methoxy-2,4-dimethylvaleronitrile) to a mixed solution of 2 g of the dispersion stabilizer (P-1) as a powder, 20.0 g of methyl acrylate and 80 g of Isopar H as a feed solution was added dropwise to the processed pigment dispersion for one hour and then allowed to react for 3 hours. About 20 minutes after initiation of the dropwise addition, heat generation started, and the temperature of the reaction mixture rose by about 5 °C. After the reaction for 3 hours, the temperature was elevated from 50 °C to 80 °C, the reaction mixture was stirred for 2 hours while increasing the flow rate of nitrogen, and the unreacted monomers were distilled off. After cooling, the reaction mixture was filtered through a 200-mesh nylon cloth, and the resulting black resin particle dispersion had a degree of polymerization of 98 % and an average volume particle size of 0.26 µm. The resulting black resin particle dispersion exhibited a good dispersion state even after preservation by standing for one month.

### <Preparation of ink composition (IJ-3) >

The foregoing colored resin particle dispersion was once concentrated by solvent distillation and then diluted with Isobar G to prepare an ink composition (IJ-3) having a viscosity of 13 cp and a surface tension of 23 mN/m.

The ink composition (IJ-3) was provided for printing in the same manner as in Example 1 using a color facsimile, SAIYUKI UX-E1CL (manufactured by Sharp Corporation). As a result, bleeding-free clear prints having a good quality were obtained. Further, scratch resistance was examined in the same manner as in Example 1. As a result, staining on the fingers was not visually observed at all, so that it was noted that the scratch resistance was extremely excellent. Even after preservation for 6 months at room temperature, the ink composition was free from sedimentation and coagulation and good in dispersibility.

### Comparative Example 2:

### <Preparation of comparative ink composition (IJR-1)>

A comparative ink composition (IJR-1) was prepared in the same manner as in the preparation of the ink composition (IJ-3), except that a pigment dispersion of seed particles was used in place of the colored resin particles of Example 3. The comparative ink composition (IJR-1) had a viscosity of 12 cp and a surface tension of 23 mN/m.

The comparative ink composition (IJR-1) was provided for printing in the same manner as in Example 1 using a color facsimile, SAIYUKI UX-E1CL (manufactured by Sharp Corporation). As a result, bleeding-free clear prints were obtained. However, when the solid image portion was rubbed by fingers, the image portion was easily removed. Therefore, it was noted that the scratch resistance was extremely poor. Further, in order that the printed image portion was not removed by rubbing by fingers, it was noted that the printed recording material must be fixed upon heating at 120 °C or higher.

It was understood from the results of the ink composition (IJ-3) of the invention and the comparative ink composition (IJR-1) that the colored resin particles coated with a low-softening resin, as prepared by seed dispersion polymerization using the polymer-treated pigment as seed particles as in the invention, exhibit good ink characteristics such as distinct printed image quality, good easiness of fixing, extremely excellent scratch resistance and good long-term dispersibility.

### Example 4:

### <Preparation of pigment dispersion>

Pigment dispersion was carried out in the same manner as in Example 3, except that an ethylene/stearyl acrylate copolymer (molar ratio: 95/5) was used as a resin for polymer treatment in place of the methyl methacrylate/stearyl methacrylate copolymer (molar ratio: 9/1) and that a 20 % solution of a dispersion stabilizer (P-5) in Isopar G was used as a pigment dispersant in place of Solprene 1205. A black pigment dispersion obtained after filtering off the glass beads had good dispersibility such that it had a volume average particle size of 0.18 µm.

### <Preparation of colored resin particles>

In a four-necked flask was charged 230.8 g of the filtrate of the pigment dispersion (solids content: 13.0 %) from which the glass beads had been filtered off, which was then heated with stirring in a nitrogen gas stream at a temperature of 75 °C for 1 hour. Next, a solution prepared by adding 0.6 g of 2,2'-azobis(2,4-dimethylvaleronitrile) to a mixed solution of 4 g of the dispersion stabilizer (P-1) as a powder, 6.7 g of methyl methacrylate, 13.4 g of methyl acrylate and 60 g of Isopar H as a feed solution was added dropwise to the pigment dispersion for one hour and then allowed to react for 3 hours in the same manner as in Example 1. About 15 minutes after initiation of the dropwise addition, heat generation started, and the temperature of the reaction mixture rose by about 4 °C. After the reaction for 3 hours, the temperature was elevated to 90 °C, the reaction mixture was stirred for 2 hours while increasing the flow rate of nitrogen, and the unreacted monomers were distilled off. The resulting black resin particle dispersion had a degree of polymerization of 95.5 % and an average volume particle size of 0.23 µm. The resulting black resin particle dispersion exhibited a good dispersion state even after preservation by standing for one month.

### <Preparation of ink composition (IJ-4)>

The foregoing colored resin particle dispersion was once concentrated by solvent distillation and then diluted with Isopar G to prepare an ink composition (IJ-4) having a viscosity of 13 cp and a surface tension of 23 mN/m.

The ink composition (IJ-4) was provided for printing in the same manner as in Example 3 using a color facsimile, SAIYUKI UX-E1CL (manufactured by Sharp Corporation). As a result, bleeding-free clear prints having a good quality were obtained. Further, scratch resistance was examined in the same manner as in Example 3. As a result, staining on the fingers was not visually observed at all, so that it was noted that the scratch resistance was extremely excellent. Even after preservation for 6 months at room temperature, the ink composition was free from sedimentation and coagulation and good in dispersibility.

### Example 5:

### <Preparation of pigment dispersion>

Ten parts by weight of Carbon Black #100 (manufactured by Mitsubishi Chemical Corporation) as a black pigment and 100 parts by weight of water were stirred in a flusher, to which was then added 60 parts by weight of a 33 % toluene solution of a styrene/vinyltoluene/lauryl methacrylate copolymer (molar ratio: 40/58/2) as a resin for polymer treatment, and the mixture was stirred in the flusher. Next, the system was heated and reduced in pressure to remove the moisture and solvent. There was thus obtained a black block having a moisture content of 1 % by weight. The black block was dried in vacuo to completely remove the moisture and then pulverized in a sample mill to obtain black powder of from 0.01 to 0.1 mm. Pigment dispersion was carried out in the same manner as in Example 3, except that the foregoing black powder was used in place of the pigment kneaded mixture and that a dispersion stabilizer (P-5) was used as a pigment dispersant in place of Solprene 1205. A black pigment dispersion obtained after filtering off the glass beads had good dispersibility such that it had a volume average particle size of 0.15 µm.

### <Preparation of colored resin particles>

Dispersion polymerization was carried out in the same manner as in Example 4 using a filtrate of the pigment dispersion (solids content: 13.0 %) from which the glass beads had been filtered off. The resulting black resin particle dispersion had a degree of polymerization of 97.0 % and an average volume particle size of 0.20 µm. The resulting black resin particle dispersion exhibited a good dispersion state even after preservation by standing for one month.

### <Preparation of ink composition (IJ-5)>

The foregoing pigment resin particle dispersion was adjusted so as to have a viscosity of 13 cp and a surface tension of 23 mN/m. There was thus obtained an ink composition (IJ-5).

The ink composition (IJ-5) was provided for printing in the same manner as in Example 3 using a color facsimile, SAIYUKI UX-E1CL (manufactured by Sharp Corporation). As a result, bleeding-free clear prints having a good quality were obtained. Further, scratch resistance was examined in the same manner as in Example 3. As a result, staining on the fingers was not visually observed at all, so that it was noted that the scratch resistance was extremely excellent. Even after preservation for 6 months at room temperature, the ink composition was free from sedimentation and coagulation and good in dispersibility.

### Example 6:

### <Preparation of pigment dispersion>

Pigment dispersion was carried out in the same manner as in Example 1, except that a yellow pigment, Microlith Yellow 3R-T (manufactured by Ciba Speciality Chemicals) was used in place of the black pigment, Microlith Black C-T (Ciba Speciality Chemicals) . A yellow pigment dispersion obtained after filtering off the glass beads had good dispersibility such that it had a volume average particle size of 0.22 µm.

### <Preparation of colored resin particles>

In a four-necked flask was charged 100 g of the yellow pigment dispersion (solids content: 20.0 %) and then heated with stirring in a nitrogen gas stream at a temperature of 80 °C for 2 hours. Next, a solution prepared by adding 0.56 g of 2,2'-azobis(2,4-dimethylvaleronitrile) to a mixed solution of 6 g of a dispersion stabilizer (P-5) as a powder, 8.8 g of methyl methacrylate, 11.2 g of methyl acrylate and 80 g of Isopar H as a feed solution was dropwise added at a dropping rate of 2. 0 mL/min. to the pigment dispersion and then allowed to react for 3 hours in the same manner as in Example 1. The temperature of the reaction mixture rose by about 4 °C. The resulting yellow resin particle dispersion had a degree of polymerization of 98 % and an average volume particle size of 0.28 µm and exhibited a good dispersion state even after preservation by standing for one month.

### <Preparation of ink composition (IJ-6)>

The yellow resin particle dispersion was diluted with Isopar G such that the content of the resin particles became 6.0 %. Next, an octadecene/semi-maleic acid octadecylamide copolymer as a charge regulator was added in an amount of 0.01 g per liter of Isopar G to prepare an ink composition (IJ-6).

Measurement of the charge amount of the ink composition (IJ-6) was conducted using a development characteristic measurement device (measuring the initial value of voltage change with time, induced on the back surface of an electrode to which a voltage of 500 V is applied) as described in JP-B-64-696. The ink composition (IJ-6) exhibited distinct positive charge property such that the entire charge was 256 mV and the charge of yellow resin particles was 205 mV. Further, it was noted that the ink composition (IJ-6) was substantially free from change in the charge amount and extremely stable even after preservation for one month. Moreover, it was noted that the charge amount could be easily controlled by the amount of charge regulator used.

### Comparative Example 3:

### <Preparation of comparative ink composition (IJR-2)>

A comparative ink composition (IJR-2) was prepared in the same manner as in the preparation of the ink composition (IJ-6) of Example 6 by using the yellow pigment dispersion itself. The charge amount of the comparative ink composition (IJR-2) was measured. As a result, the comparative ink composition (IJR-2) was negatively charged, and the entire charge was 95 mV and the charge of yellow pigment particles was 15 mV.

It can be understood from Example 6 and Comparative Example 3 that though the yellow pigment, Microlith Yellow 3R-T (comparative ink composition (IJR-2)) as seed particle is originally negative charged, the colored resin particles (ink composition (IJ-6)) coated with a resin by seed dispersion polymerization according to the invention exhibit distinct positive charge polarity and that the charge amount thereof can be easily controlled by the amount of charge regulator. That is, it can be understood that by coating the pigment surface with a resin by seed dispersion polymerization, the charge polarity (by appropriately choosing the charge regulator) and the charge amount can be freely controlled, regardless of the original charge polarity of pigment.

### <Image picture, drawing property>

An inkjet device equipped with 64-channel (100 dpi) inkjet heads of an electrostatic system having a head structure as shown in Fig. 1 was used, and the ink composition (IJ-6) was charged in an ink tank. After removing dusts on the surface of coated recording paper as a recording medium by air pump suction, the discharge heads were moved to the picture drawing position towards the coated recording paper, and the ink was discharged at a picture drawing resolution of 600 dpi to draw a picture. The picture drawing was conducted while changing dot areas at 16 stages of dot size in the range of from 15 µm to 60 µm by regulating the pulse voltage. The drawn picture was free from bleeding and had good and distinct images of satisfactory density. The discharge stability from ink head was good, no clogging occurred, and dot-form printing could be stably conducted in image picture drawing. Further, scratch resistance was examined in the same manner as in Example 1. As a result, staining on the fingers was not visually observed at all, so that it was noted that the scratch resistance was extremely excellent. Even after preservation for 6 months at room temperature, the ink composition (IJ-6) was free from sedimentation and coagulation and good in dispersibility.

On the other hand, using the comparative ink composition (IJR-2), picture drawing was conducted in the same manner but changing the pulse voltage applied to heads to a negative polarity. As a result, the drawn picture severely bled, and the image density was low. Further, since discharge failure occurred, image defects were observed, and satisfactory images were not obtained.

It can be understood from these results that since the pigment resin particles (ink composition (IJ-6)) coated with a resin by seed dispersion polymerization according to the invention exhibit distinct positive charge property and have a sufficient charge amount, the ink composition (IJ-6) has good ink characteristics such as distinct printed image quality, good discharge stability, extremely excellent scratch resistance and good long-term dispersibility. Examples 7 to 20:

### <Preparation of pigment dispersion>

Pigment dispersion was carried out in the same manner as in Example 1, except that a dispersion stabilizer (P-21) was used as a pigment dispersant in an amount of 50 wt % based on the processed pigment in place of the dispersion stabilizer (P-1) and that a blue processed pigment, Microlith Blue 4G-T (manufactured by Ciba Specialities Chemicals) in place of the black processed pigment, Microlith Black C-T. The pigment dispersion obtained after filtering off the glass beads had good dispersibility such that it had a volume average particle size of 0.16 µm. Using the blue pigment dispersion, seed dispersion polymerization was conducted to prepare colored resin particles and ink compositions (IJ-7) to (IJ-20) as described below.

### <Preparation of colored resin particles>

The same reaction operations as in Example 1 were followed, except that 157.5 g of the dispersion of the blue processed pigment (solids content: 19.1 %) was used and that a solution of 8 g of a dispersion stabilizer (P) as a powder and 40 g of a polymerizable monomer (s) as shown in Table D below, 80 g of Isopar G and 1 % by mole, based on the polymerizable monomer(s), of 2,2' -azobis (2, 4-dimethylvaleronitrile) was added dropwise as a feed solution over a period of 2 hours. The temperature of each of the reaction mixtures rose by about 3 to 8 °C. The resulting blue particle dispersions 7 to 20 had a degree of polymerization of from about 89 to 98 % and an average volume particle size of from 0.20 to 0.26 µm. Further, each of the blue particle dispersions 7 to 20 exhibited a good dispersion state even after preservation by standing for one month.

### <Preparation of ink compositions (IJ-7) to (IJ-20)>

The foregoing colored resin particle dispersions were each adjusted so as to have a viscosity of from 12 to 14 cp and a surface tension of from 22 to 24 mN/m. There were thus obtained in ink compositions (IJ-7) to (IJ-20).

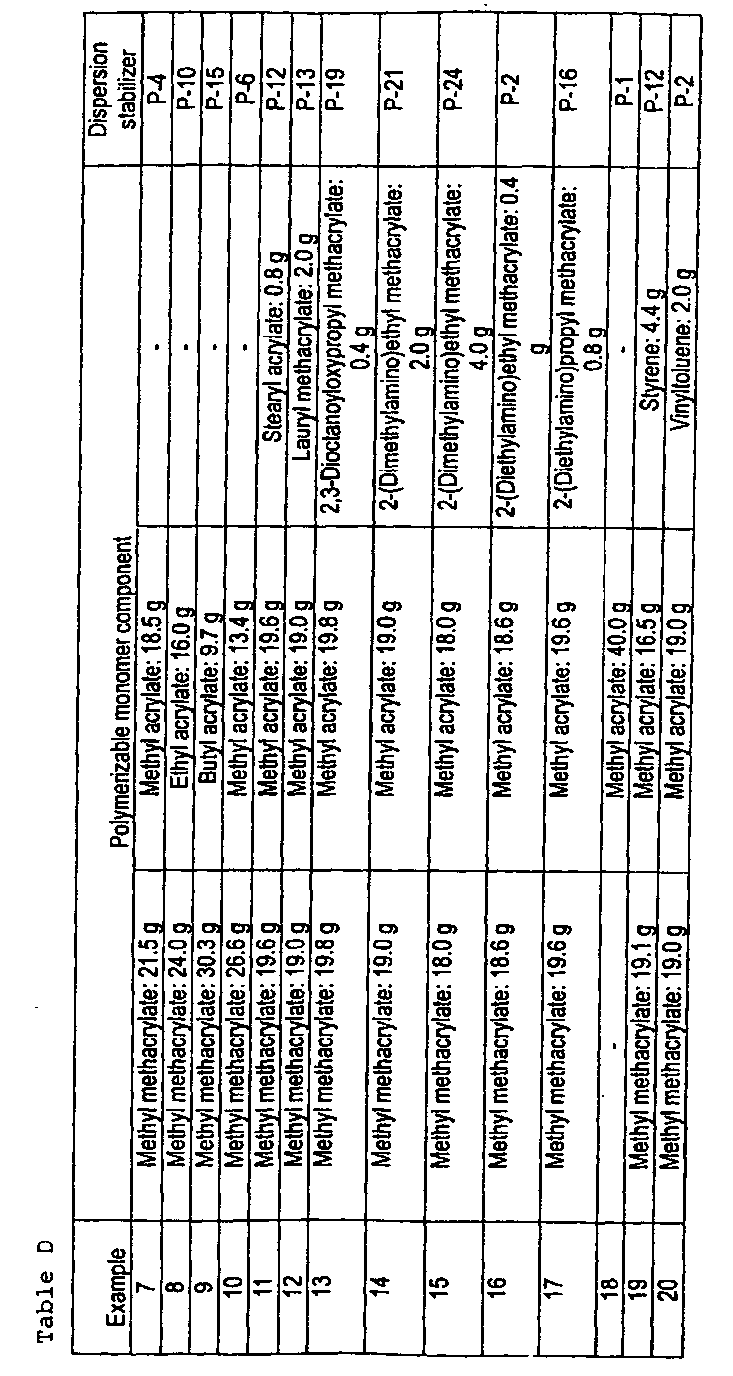

Each of the ink compositions (IJ-7) to (IJ-20) was provided for printing in the same manner as in Example 1 using a color facsimile, SAIYUKI UX-ELCL (manufactured by Sharp Corporation). As a result, bleeding-free clear prints having a satisfactory density and a good quality were obtained. Further, the staining on the fingers was not visually observed at all, so that it was noted that the scratch resistance was extremely excellent. Even after preservation for 6 months at room temperature, the ink compositions (IJ-7) to (IJ-20) were free from sedimentation and coagulation and good in dispersibility.

### Example 21:

### <Preparation of pigment dispersion and colored resin particles>

Colored resin particles were prepared by the following seed dispersion polymerization using the blue processed pigment dispersion of Example 7.

The same reaction operations as in Example 1 were followed, except that 157.5 g of a dispersion of the blue processed pigment (solids content: 19.1 %) was used and that a solution of 8 g of a dispersion stabilizer (P-26) having the following structure as a powder, 20.0 g of ethyl methacrylate, 20.0 g of methyl acrylate, 80 g of Isobar G, and 1 % by mole, based on the polymerizable monomers, of 2,2'-azobis(2,9-dimethylvaleronitrile) was added dropwise as a feed solution over a period of 2 hours. The temperature of the reaction mixture rose by about 4 °C. The resulting blue particle dispersion 21 had a degree of polymerization of about 93 % and an average volume particle size of 0.25 µm. Further, the blue particle dispersion 21 exhibited a good dispersion state even after preservation by standing for one month.

### (Preparation of dispersion stabilizer (P-26))

A mixture of 70 g of octadecyl methacrylate and 2.0 g of benzyl N, N-diethyldithiocarbamate was sealed in a vessel in a nitrogen gas stream and heated at a temperature of 60 °C. The mixture was subjected to polymerization upon irradiation with light emitting from a 400-W high pressure mercury vapor lamp from a distance of 10 cm through a glass filter for 10 hours. Thirty grams of styrene monomer and 180 g of methyl ethyl ketone were added thereto, and after purging with nitrogen, the mixture was again irradiated with light for 10 hours. The resulting reaction mixture was re-precipitated in 3 liters of methanol and the precipitate was collected and dried in vacuo to obtain a dispersion stabilizer (P-26) having a weight average molecular weight of 90,000 in a yield of 78.0 g.

### Dispersion stabilizer (P-26)

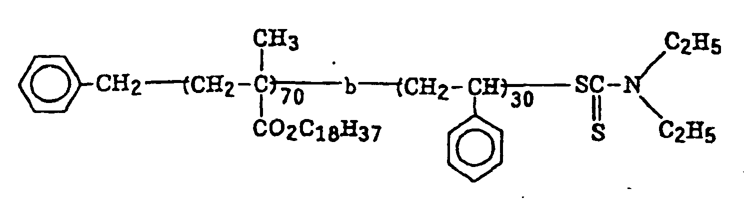

### <Preparation of ink composition (IJ-21)>

The foregoing pigment resin particle dispersion was adjusted so as to have a viscosity of 12 cp and a surface tension of 24 mN/m. There was thus obtained an ink composition (IJ-21) .

The ink composition (IJ-21) was provided for printing in the same manner as in Example 1 using a color facsimile, SAIYUKI UX-E1CL (manufactured by Sharp Corporation). As a result, the ink composition (IJ-21) gave bleeding-free clear prints having a satisfactory density and a good quality. Further, the staining on the fingers was not visually observed at all, so that it was noted that the scratch resistance was extremely excellent. Even after preservation for 6 months at room temperature, the ink composition (IJ-21) was free from sedimentation and coagulation and good in dispersibility.

### Example 22:

The ink composition (IJ-6) obtained in Example 6 was used as an electrophotographic liquid developer, and printing test was conducted using a wet type copying machine, DT-2500 manufactured by Ricoh Co., Ltd. As a result, an image having a sufficient image density and good fixing property was obtained.

Further, this electrophotographic liquid developer was extremely small in change of the charge with the lapse of time and excellent in redispersibility and storage stability.

According to the ink composition of the invention, which contains resin-coated colored resin particles obtained by seed dispersion polymerization using a surface-treated coloring agent as a seed particle in a non-aqueous solvent, can be obtained an oil based ink for inkjet printer in which a coloring agent is uniformly dispersed in the state of fine particle, and dispersion stability of the coloring agent dispersion is excellent. Further, an oil based ink for inkjet printer having high discharge stability such that no clogging occurs in a nozzle section can be obtained. Moreover, an oil based ink for inkjet printer having excellent drying property on recording paper, excellent water resistance of recorded image, excellent light fastness and high-level scratch resistance is obtained.

Also, an oil based ink for use in an electrostatic inkjet printer or an electrophotographic liquid developer, which is excellent not only in dispersion stability and scratch resistance but also in control of charge polarity and stability of charge with the lapse of time, can be obtained. In addition, according to the invention, a process of producing resin particles having the foregoing characteristics and including a pigment uniformly dispersed in the state of fine particle is provided.

The entire disclosure of each and every foreign patent application from which the benefit of foreign priority has been claimed in the present application is incorporated herein by reference, as if fully set forth herein.

## Claims

1. A method of inkjet recording comprising ejecting onto an ink receiving medium an oil based ink composition comprising colored resin particles comprising a surface-treated coloring agent covered with a resin obtainable by dispersion polymerisation of a monofunctional polymerizable monomer (M) with coloring component fine particles comprising a surface-treated coloring agent, which are dispersed in a non-aqueous solvent having a dielectric constant of from 1.5 to 20 and a surface tension of from 15 to 60 mN/m at 25°C, as seed particles, in the presence of a dispersion stabilizer (P) soluble in the non-aqueous solvent and a polymerisation initiator.

2. A method according to Claim 1, wherein the surface-treated coloring agent is an organic or inorganic pigment coated with a polymer.

3. A method according to Claim 1, wherein the coloring component fine particles are obtainable by dispersing the surface-treated coloring component in the non-aqueous solvent with a pigment dispersant.

## Patentansprüche

1. Verfahren zur Tintenstrahlaufzeichnung, umfassend das Ejizieren einer Tintenzusammensetzung auf Ölbasis, umfassend gefärbte Harzteilchen mit einem oberflächenbehandelten Färbemittel, das mit einem Harz bedeckt ist, erhältlich durch Dispersionspolymerisation eines monofunktionellen polymerisierbaren Monomers (M) mit feinen Färbekomponententeilchen, umfassend ein oberflächenbehandeltes Färbemittel, die in einem nicht wässrigen Lösungsmittel mit einer Dielektrizitätskonstante von 1,5 bis 20 und einer Oberflächenspannung von 15 bis 60 mN/m bei 25°C als Keimteilchen dispergiert sind, in der Gegenwart eines Dispersionsstabilisators (P), der in dem nicht wässrigen Lösungsmittel löslich ist, und eines Polymerisationsinitiators, auf ein Tintenempfangsmedium.

2. Verfahren nach Anspruch 1, worin das oberflächenbehandelte Färbemittel ein organisches oder anorganisches Pigment ist, das mit einem Polymer beschichtet ist.

3. Verfahren nach Anspruch 1, worin die feinen Färbekomponententeilchen erhältlich sind durch Dispergieren der oberflächenbehandelten Färbekomponente in dem nicht wässrigen Lösungsmittel mit einem Pigmentdispersionsmittel.

## Revendications

1. Procédé d'enregistrement à jet d'encre comprenant l'éjection sur un milieu receveur d'encre d'une composition d'encre à base d'huile comprenant des particules colorées de résine comprenant un agent de coloration traité en surface, recouvert d'une résine pouvant être obtenue par polymérisation par dispersion d'un monomère (M) monofonctionnel polymérisable avec de fines particules d'un composant de coloration comprenant un agent de coloration traité en surface, qui sont dispersées dans un solvant non aqueux ayant une constante diélectrique comprise entre 1,5 et 20 et une tension superficielle comprise entre 15 et 60 mN/m à 25°C, en tant que particules germes, en présence d'un stabilisateur de dispersion (P) soluble dans le solvant non aqueux et d'un initiateur de polymérisation.

2. Procédé selon la revendication 1, dans lequel l'agent de coloration traité en surface est un pigment organique ou inorganique recouvert d'un polymère.

3. Procédé selon la revendication 1, dans lequel les fines particules d'un composant de coloration peuvent être obtenues par dispersion du composant de coloration traité en surface dans le solvant non aqueux avec un agent de dispersion de pigment.
